# EUROPÄISCHE PATENTSCHRIFT

(11) **EP 3 721 239 B1**
(45) Veröffentlichungstag und Bekanntmachung des Hinweises auf die Patenterteilung: **06.11.2024**
(21) Anmeldenummer: 18822279.8
(22) Anmeldetag: 04.12.2018
(51) Int. Cl.: G01Q 10/04, G01Q 20/02, G01Q 20/04, G02B 6/42

(54) **MIKRO-OPTOMECHANISCHES SYSTEM UND VERFAHREN ZU SEINER HERSTELLUNG**
MICRO-OPTOMECHANICAL SYSTEM AND METHOD FOR THE PRODUCTION THEREOF
SYSTÈME MICRO-OPTOMÉCANIQUE ET SON PROCÉDÉ DE FABRICATION

(30) Priorität: 05.12.2017 DE 102017221952
(43) Veröffentlichungstag der Anmeldung: 14.10.2020
(73) Patentinhaber: Karlsruher Institut für Technologie, 76131 Karlsruhe (DE)
(72) Erfinder: DIETRICH, Philipp-Immanuel, 97999 Igersheim (DE); GOERING, Gerald, 76307 Karlsbad (DE); BLAICHER, Matthias, 76275 Ettlingen (DE); TRAPPEN, Mareike, 76137 Karlsruhe (DE); HÖLSCHER, Hendrik, 76356 Weingarten (DE); KOOS, Christian, 74936 Siegelsbach (DE)
(74) Vertreter: Altmann Stößel Dick Patentanwälte PartG mbB
(86) Internationale Anmeldenummer: PCT/EP2018/083414
(87) Internationale Veröffentlichungsnummer: WO 2019/110548

(56) Entgegenhaltungen:
- WO-A1-2011/031142
- US-A1- 2009 002 714
- US-A1- 2015 285 836
- G. GRUCA ET AL: "Demonstration of an optically actuated ferrule-top device for pressure and humidity sensing", SENSORS AND ACTUATORS A: PHYSICAL, vol. 190, 21 November 2012 (2012-11-21), NL, pages 77 - 83, XP055567249, ISSN: 0924-4247, DOI: 10.1016/j.sna.2012.11.011
- YAO MIAN ET AL: "Optically 3-D $\mu $ -Printed Ferrule-Top Polymer Suspended-Mirror Devices", IEEE SENSORS JOURNAL, IEEE SERVICE CENTER, NEW YORK, NY, US, vol. 17, no. 22, 15 November 2017 (2017-11-15), pages 7257 - 7261, XP011672282, ISSN: 1530-437X, [retrieved on 20171023], DOI: 10.1109/JSEN.2017.2737551

## Beschreibung

### Gebiet der Erfindung

Die vorliegende Erfindung liegt auf dem Gebiet der Optomechanik, insbesondere der Mikro-Optomechanik, und betrifft ein mikro-optomechanisches System, welches über mindestens ein optisches Subsystem und mindestens eine optomechanische Struktur verfügt, und ein Verfahren zu seiner Herstellung.

Das optische Subsystem kann hierbei bevorzugt Glasfasern, Stecksysteme für Glasfasern oder integriert-optische Schaltkreise beinhalten, wobei der integriert-optische Schaltkreis vorzugsweise Fotodetektoren, Lichtquellen, optische Modulatoren oder passive optische Bauteile wie Leistungsteiler oder Filter umfassen kann. Insbesondere kann es sich bei den optischen Subsystemen um integriert-optische Chips der optischen Nachrichtentechnik handeln. Weiterhin kann das optische Subsystem auch Laser und Fotodioden sowie andere aktive optische Komponenten umfassen. Das optische Subsystem kann allerdings auch nur eine einzelne Komponente der oben genannten Komponenten umfassen und zu weiteren Subsystemen untrennbar oder durch ein Stecksystem verbindbar sein. Andere Arten von optischen Subsystemen sind jedoch denkbar.

Optomechanische Systeme finden vorzugsweise Anwendung in Messtechnik, Sensorik, Metrologie, Materialwissenschaften, Lebenswissenschaften, Medizintechnik und optischer Kommunikationstechnik. Weitere Einsatzbereiche sind denkbar.

### Stand der Technik

Aus dem Stand der Technik sind optomechanische Systeme, insbesondere in Form von Cantilevern, bekannt, welche für Messungen von Oberflächenprofilen nach dem Prinzip eines Rasterkraftmikroskops (*engl.* Atomic Force Microscope, AFM) eingesetzt werden, wobei der Cantilever in einer besonders bevorzugten Ausprägung mit einer Spitze ausgestattet ist. Als der Cantilever wird hierbei ein einseitig eingespannter Balken (Kragbalken) bezeichnet, der für eine Schwingung geeignet ist. Bei einer Messung wird ein oszillierender Cantilever rasterförmig über eine Probe bewegt und eine Auswirkung der Wechselwirkung zwischen Probe und Spitze auf den Cantilever messtechnisch erfasst. Für eine messtechnische Erfassung einer Auslenkung des Cantilevers werden typischerweise Laserstrahlen verwendet, die bei einer Reflexion an dem Cantilever ausgelenkt werden. Oftmals wird der Cantilever durch eine geeignete Kraft, beispielsweise aufgebracht durch einen Piezo-Aktuator, zu einer Schwingung angeregt. Diese Betriebsart des Cantilevers wird als dynamische Betriebsart bezeichnet (*engl.* dynamic mode). Oftmals ist der Cantilever auch mit einer Spitze ausgestattet, welche es ermöglicht eine Topographie mit sehr hoher lateraler Auflösung zu messen. Die laterale Auflösung beschreibt hierbei die Fähigkeit zwischen Objekten in einer von der Probenoberfläche definierten Fläche zu unterscheiden. In einer alternativen Ausführung ist es möglich, die Spitze zu beleuchten und die dabei auftretende Wechselwirkung mit der Probe zu messen. Durch die Beschaffenheit der Spitze kann diese Wechselwirkung zwischen Licht, der Probe und der Spitze lokal sehr unterschiedlich ausgeprägt sein und weit unterhalb der eingesetzten Wellenlänge liegen. Dieses Verfahren ist als optisch rasternde Nahfeldmikroskopie (*engl.* Scanning Near-Field Optical Microscopy, SNOM oder Near-Field Scanning Optical Microscopy, NSOM) bekannt.

Die Herstellung von Cantilevern erfolgt in der Regel durch anisotrope Ätzprozesse unter Verwendung von Silizium oder Siliziumnitrid. Hierbei ist auch eine Herstellung von Spitzen möglich, wie sie beispielsweise für die Herstellung von AFM-Cantilevern benötigt wird. Die Formgebung des Cantilevers kann hierbei durch eine Verwendung von maskenbasierten zweidimensionalen Lithographieverfahren prozessbedingt eingeschränkt sein. Zudem ist eine Kontrolle über Eigenschaften des Cantilevers oft unzureichend. Dies kann sich beispielsweise in einer typischen Variation der Resonanzfrequenz von bis zu 50 % äußern. Darüber hinaus kann die Herstellung der Spitze nur sehr eingeschränkt in Bezug auf Formgebung und Größe eingestellt werden. Es besteht die Möglichkeit, eine Spitze durch nachträgliches Kleben hinzuzufügen. Dieses Verfahren stellt jedoch einen manuellen und damit schlecht reproduzierbaren Prozess dar, welcher für die kommerzielle Nutzung nicht geeignet ist. Die Herstellung von Spitzen durch Zwei-Photonen Polymerisation kann diesen Nachteil kompensieren, ermöglich jedoch nur eine begrenzte Kontrolle über die mechanischen Eigenschaften des Cantilevers. Weiterhin ist es sehr aufwendig, einen solchen Cantilever in ein optisches System für den Betrieb in einem AFM zu integrieren. Für eine AFM- Messung ist hierbei eine manuelle Ausrichtung eines Messlasers notwendig. Komplexere Aufgaben wie SNOM-Messungen erfordern ein primär manuelles Herstellungsverfahren, wobei eine durch thermisches Aufheizen lang gezogene optische Faser, deren Spitze später als optische Messspitze verwendet wird, an einen Schwingquarz geklebt und anschließend mit Metall bedampft wird. Hierbei bezeichnet eine optische Faser einen typischerweise dielektrischen Lichtwellenleiter, welche einen Faserkern mit einem höheren Brechungsindex im Vergleich zu dem Brechungsindex einer Ummantelung aufweist. Dieser Brechungsindexunterschied ermöglicht eine Lokalisierung des Lichtes im Kern der Faser. Das vorgestellte Verfahren ist jedoch aufwendig und schlecht skalierbar und weist nur eine geringe Reproduzierbarkeit auf. Ähnliche Prozesse zum Herstellen von optischen Spitzen, welche auf einem chemischen Ätzprozess basieren, weisen jedoch auch eine geringe Reproduzierbarkeit und einen hohen Anteil an manuellen Arbeitsschritten auf. Weitere Probleme ergeben sich bei einer SNOM-Messung, da es hierbei erforderlich ist, Licht, welches in die Spitze eindringt oder die Spitze verlässt, durch eine mit Mikrometer-Genauigkeit auszurichtende Optik von der Spitze ausgehend einzusammeln bzw. an der Spitze zu fokussieren. Die beschriebenen Nachteile bei Herstellung und Verwendung der Cantilever hat insbesondere die Verwendung von SNOM primär auf Forschungsaufgaben eingeschränkt.

Weiterhin sind optomechanische Systeme für Anwendungen in Sensorsystemen bekannt, wobei auch hier die optomechanische Systeme insbesondere als Cantilever ausgelegt sein können. Hierbei wird beispielsweise ein pH-Wert einer Flüssigkeit messtechnisch erfasst. Zu diesem Zweck kann ein Cantilever mit unterschiedlichen Materialien beschichtet werde, so dass bei verschiedenen pH-Werten eine unterschiedliche Verbiegung des Cantilevers auftritt.

J. Li et al., "A Micro-Machined Optical Fiber Cantilever as a Miniaturized pH Sensor", IEEE Sensors J., Vol. 15, No. 12, 2015, beschreiben ein Verfahren und eine Anordnung zur Durchführung von Messungen des pH-Wertes durch an Faserfacetten in subtraktiver Herstellungsweise fabrizierte Cantilever. Hierbei wird die Möglichkeit eines Einsatzes von optisch ausgelesenen Sensorsystemen in umgebenden Flüssigkeiten vorgeschlagen. Die Anordnung ist jedoch ein reines Sensorsystem, wobei die zu messende Bewegung der Cantilever ausschließlich durch den pH-Wert der umgebenden Lösung bewirkt wird. Das beschriebene Herstellungsverfahren weist die zuvor aufgeführten Nachteile subtraktiver Verfahren auf.

Im Falle von optischen Subsystemen, welche über kleine Modenfelder verfügen und damit insbesondere als einmodige Komponenten ausgeführt sein können, können zusätzliche Probleme auftreten. In der optischen Kommunikationstechnik ist es besonders vorteilhaft, eine optomechanische Struktur mit einer Genauigkeit in Bezug auf ein nachrichtentechnisches optisches Subsystem auszurichten, welches im Bereich des Modenfelddurchmessers des Lichtfeldes des optischen Subsystems liegt. Eine präzise Ausrichtung ist mit gängigen Positionierungs- und Fixierungsmethoden nicht reproduzierbar möglich, da der Modenfelddurchmesser typischerweise jedoch nur 0,5 µm bis 5 µm beträgt. Zudem wäre es besonders vorteilhaft, dass die Effizienz, mit der Licht das optische Subsystem verlässt und nach Reflexion oder Beaufschlagung des optomechanischen Systems wieder in das optische Subsystem einkoppelt, möglichst hoch ist. Auch diese Aufgabe ist mit bestehenden Fertigungstechnologien nicht hinreichend lösbar.

Weiterhin sind optomechanische Systeme für Anwendungen in der Sensorik bekannt. Hierbei kann die optische Struktur des optomechanischen Systems Teil eines optischen Bauteils, wie z.B. eines Resonators oder eines Interferometers, sein, welches sich durch eine Beaufschlagung mit mechanischen Schwingungen verändern kann.

Z. Bayindir et al., "Polymer microcantilevers fabricated via multiphoton absorption polymerization", Appl. Phys. Lett. 86, S. 064105, 2005, beschreiben ein Verfahren zur Herstellung von Cantilevern mit Zwei-Photonen Polymerisation. Die so hergestellten Cantilever dienen jedoch nur der Charakterisierung der mechanischen Eigenschaften des gedruckten Materials und weisen weder aktorische noch sensorische Funktionalitäten auf.

H. Wang et al., "A miniaturized optical fiber microphone with concentric nanorings grating and microsprings structured diaphragm", Optics & Laser Technol. 78, S. 110-15, 2016 beschreiben ein durch 3D-Druck erzeugtes optisches Mikrophon, welches auf der Facette einer optischen Faser hergestellt wurde. Diese Anordnung stellt ein rein optisch auslesbares Sensorsystem dar und weist keine Einrichtungen zur optischen Aktuation der durch 3D-Druck erzeugten Geometrie auf.

P. Minh et al.,"Hybrid optical fiber-apertured cantilever near-field probe", Appl. Phys. Lett. 79, S. 3020, 2001, beschreiben ein Verfahren und eine Anordnung, um SNOM-Messungen mit an Faserenden integrierten Cantilevern durchzuführen. Dabei wird durch ein optisches Signal lediglich die Position des Cantilevers ausgelesen; eine optische Anregung wird nicht beschrieben. Zur Herstellung der Cantilever werden konventionelle subtraktive Mikrofabrikationsverfahren verwendet, wodurch die damit erreichbaren Geometrien stark einschränkt werden.

D. Ianuzzi et al., "Fibre-top cantilevers: design, fabrication and applications", Meas. Sci. Technol. 18 S. 3247-52, 2007, beschreiben ein Verfahren zur Herstellung von Cantilevern an Faserenden, das auf einem konventionellen subtraktiven Mikro-Fertigungsverfahren beruht und keine Möglichkeit zur optomechanischen Anregung der Cantilever vorsieht.

N. Umeda et al., "Scanning attractive force microscope using photothermal vibration", J. Vac. Science & Technol. B: Microelectronics and Nanometer Structures Processing, Measurement, and Phenomena 9, S. 1318-1322, 1990, beschreiben ein Verfahren und eine Anordnung, zur optomechanischen Anregung und optischen Vermessung von Cantilevern bezüglich ihrer Position. Die darin beschriebene Anordnung umfasst einen konventionellen AFM-Laboraufbau, in dem ein durch konventionelle Mikrofabrikationsverfahren erzeugter Cantilever mit hoher Präzision relativ zu den übrigen Komponenten des Aufbaus ausgerichtet werden muss. Damit kann weder die Vielfalt der durch additive oder direktschreibende Fertigungsverfahren erreichbaren Strukturgeometrien eingesetzt werden noch ist das vorgeschlagene Verfahren auf kompakte Systeme oder Array-Anordnungen übertragbar. Dieselben Einschränkungen gelten für WO 2016/073999 A1, in welcher die optische Anregung eines Cantilevers für AFM-Messungen mit einem makroskopischen optischen Aufbau offenbart wird.

G. Goering et al., "Tailored probes for atomic force microscopy fabricated by two-photon polymerization", Appl. Phys. Lett. 109, S. 063101, 2016, beschreiben ein Verfahren zur Herstellung von Freiform-Spitzen und -strukturen auf bestehenden Cantilevern unter Einsatz von Zwei-Photonen Polymerisation.

US 7,637,149 B2 offenbart einen mikro-optomechanischen Kraft- und Positionssensor, in welchem die Auslenkung einer Messspitze mit Hilfe von optischen Interferenzeffekten von an einem oder mehreren optischen Gittern gebeugtem Licht detektiert wird, wofür ein besonders Ausleseverfahren eingesetzt wird. Zusätzlich werden elektrostatische und piezoelektrische Verfahren zur Aktuation der Messspitze vorgeschlagen. Das Sensorelement und die zugehörigen Gitter werden vollständig mit konventionellen Mikrofabrikationsverfahren erzeugt.

US 6 330 824 B1 offenbart ein Rasterkraftmikroskop mit einem Cantilever in Lösung, wobei der Cantilever mit Energie beaufschlagt wird, um sich zu verbiegen und zu vibrieren und um die Amplitude der Vibration aus der Energie zu bestimmen.

H. Adam et al.; "Photothermal excitation setup for a modified commercial atomic force microscope"; Review of Scientific Instruments 85, 023703 (2014), beschreiben die Auslöschung von ungewollten Cantilever-Resonanzen in der Rasterkraftmikroskopie in Lösung.

US 2006/0162455 A1 offenbart ein Verfahren und eine Vorrichtung zur Bestimmung der Vibrationsfrequenz eines Cantilever-Arrays mittels optischem Pumpen und optischer Vermessung. Hierzu werden die Cantilever mittels modulierter optischer Anregung nacheinander an ihren Anregungsfrequenzen angeregt und die Vibrationen mit einer Laser-Doppler-Einrichtung erfasst.

D. Kiracofe et al; "High efficiency laser photothermal excitation of microcantilever vibrations in air and liquids"; Review of Scientific Instruments 82, 013702 (2011), beschreiben die Anregung von Mikrocantilevern für die Rasterkraftmikroskopie mittels photothermischer Anregung, wobei die photothermisch zu beaufschlagende Sonde bevorzugt über einen trapezoiden Querschnitt verfügt.

G. Gruca et al.; "Demonstration of an optically actuated ferrule-top device for pressure and humidity sensing"; Sensors and Actuators, A 190, S. 77-83 (2013) beschreiben einen mikro-mechanischen Ferrule-Top-Sensor mit einem rein optischen Betätigungsverfahren. Das Verfahren beruht auf dem thermischen Photoeffekt, der ausreicht, um sowohl eine signifikante statische Biegung zu erzeugen als auch den Sensor zur Resonanz anzuregen. Dieser Mechanismus kann zur Implementierung von Ferrule-Top-Resonanzsensoren für Feuchtigkeits- und Druckmessungen genutzt werden.

### Aufgabe der Erfindung

Ausgehend hiervon, besteht die Aufgabe der vorliegenden Erfindung darin, ein mikro-optomechanisches System und ein Verfahren zu seiner Herstellung bereitzustellen, welche die aufgeführten Nachteile und Einschränkungen des Standes der Technik zumindest teilweise überwinden.

Insbesondere soll ein Herstellungsverfahren angegeben werden, das erlaubt, mechanische Strukturen in einem robusten und automatisierbaren Herstellungsprozess mit möglichst hoher Maßhaltigkeit, hoher Auflösung, großer geometrischer Vielfalt in drei Dimensionen und guter Reproduzierbarkeit bereitzustellen und mit hoher relativer Positionierungsgenauigkeit mit optischen Systemen zu kombinieren. Die so erhaltenen optomechanischen Systeme sollen im Vergleich zu bekannten optomechanischen Systemen deutliche Vorteile im Hinblick auf Kompaktheit, Robustheit, Herstellungskosten und Skalierbarkeit bieten.

### Offenbarung der Erfindung

Diese Aufgabe wird durch ein mikro-optomechanisches System und ein Verfahren zu seiner Herstellung mit den Merkmalen der unabhängigen Patentansprüche gelöst. Vorteilhafte Weiterbildungen, welche einzeln oder in beliebiger Kombination realisierbar sind, sind in den abhängigen Ansprüchen dargestellt.

Im Folgenden werden die Begriffe "haben", "aufweisen", "umfassen" oder "einschließen" oder beliebige grammatikalische Abweichungen davon in nicht-ausschließlicher Weise verwendet. Dementsprechend können sich diese Begriffe sowohl auf Situationen beziehen, in welchen, neben den durch diese Begriffe eingeführten Merkmalen, keine weiteren Merkmale vorhanden sind, oder auf Situationen, in welchen ein oder mehrere weitere Merkmale vorhanden sind. Beispielsweise kann sich der Ausdruck "A hat B", "A weist B auf', "A umfasst B" oder "A schließt B ein" sowohl auf die Situation beziehen, in welcher, abgesehen von B, kein weiteres Element in A vorhanden ist (d.h. auf eine Situation, in welcher A ausschließlich aus B besteht), als auch auf die Situation, in welcher, zusätzlich zu B, ein oder mehrere weitere Elemente in A vorhanden sind, beispielsweise Element C, Elemente C und D oder sogar weitere Elemente.

Weiterhin wird darauf hingewiesen, dass die Begriffe "mindestens ein" und "ein oder mehrere" sowie grammatikalische Abwandlungen dieser Begriffe, wenn diese in Zusammenhang mit einem oder mehreren Elementen oder Merkmalen verwendet werden, ausdrücken sollen, dass das Element oder Merkmal einfach oder mehrfach vorgesehen sein kann, in der Regel lediglich einmalig verwendet wird, beispielsweise bei der erstmaligen Einführung des Merkmals oder Elementes. Bei einer nachfolgenden erneuten Erwähnung des Merkmals oder Elementes wird der entsprechende Begriff "mindestens ein" oder "ein oder mehrere" in der Regel nicht mehr verwendet, ohne Einschränkung der Möglichkeit, dass das Merkmal oder Element einfach oder mehrfach vorgesehen sein kann.

Weiterhin werden im Folgenden die Begriffe "vorzugsweise", "insbesondere", "beispielsweise" oder ähnliche Begriffe in Verbindung mit optionalen Merkmalen verwendet, ohne dass alternative Ausführungsformen hierdurch beschränkt werden. So sind Merkmale, welche durch diese Begriffe eingeleitet werden, optionale Merkmale, und es ist nicht beabsichtigt, durch diese Merkmale den Schutzumfang der Ansprüche und insbesondere der unabhängigen Ansprüche einzuschränken. So kann die Erfindung, wie der Fachmann erkennen wird, auch unter Verwendung anderer Ausgestaltungen durchgeführt werden. In ähnlicher Weise werden Merkmale, welche durch "in einer Ausführungsform der Erfindung" oder durch "in einem Ausführungsbeispiel der Erfindung" eingeleitet werden, als optionale Merkmale verstanden, ohne dass hierdurch alternative Ausgestaltungen oder der Schutzumfang der unabhängigen Ansprüche eingeschränkt werden soll. Weiterhin sollen durch diese einleitenden Ausdrücke sämtliche Möglichkeiten, die hierdurch eingeleiteten Merkmale mit anderen Merkmalen zu kombinieren, seien es optionale oder nicht-optionale Merkmale, unangetastet bleiben.

In einem ersten Aspekt betrifft die vorliegende Erfindung ein mikro-optomechanisches System, welches umfasst:
- mindestens ein optisches Subsystem, welches zu einer Abstrahlung mindestens eines optischen Aktorsignals und zu einem Empfang mindestens eines optischen Sensorsignals eingerichtet ist; und
- mindestens eine optomechanische Struktur, welche mittels eines direktschreibenden Mikrostrukturierungsverfahrens in direktem Kontakt mit dem optischen Subsystem aus einem Photoresist hergestellt ist, wobei die optomechanische Struktur mindestens ein optisches Aktorelement und mindestens ein optisches Sensorelement umfasst,
wobei das optische Aktorelement in Wechselwirkung mit dem optischen Aktorsignal zu einer Änderung eines mechanischen Zustands der optomechanischen Struktur eingerichtet ist, und wobei das optische Sensorelement in Wechselwirkung mit dem optischen Sensorsignal zu einer Erfassung der Änderung des mechanischen Zustands der optomechanischen Struktur oder einer damit in Beziehung stehenden Größe eingerichtet ist.

Das hier vorgeschlagene "mikro-optomechanische System" betrifft somit eine Vorrichtung, welche mittels einer durch das optische Subsystem bereitgestellte optische Anregung sowohl eine Änderung eines mechanischen Zustands der optomechanischen Struktur hervorrufen als auch nachweisen kann. Der Begriff der "Änderung" bezeichnet hierbei eine zeitliche Veränderung des mechanischen Zustands der optomechanischen Struktur. Der Begriff des "optomechanischen Systems" bezeichnet somit eine Vorrichtung, welche sowohl optische Komponenten als auch mechanische Komponenten aufweist, wobei zusätzlich weitere Komponenten, insbesondere elektronische oder elektromechanische Bauteile, vorhanden sein können. Der Vorsatz "mikro-" bezeichnet hierbei einen Umstand, dass die optischen Komponenten und/oder die mechanischen Komponenten, vorzugsweise die optischen Komponenten und die mechanischen Komponenten, hier als mikro-optische Komponenten bzw. mikro-mechanische Komponenten vorliegen und hierbei Strukturen aufweisen, welche Dimensionen unterhalb von 10 µm, bevorzugt unterhalb von 2 µm, besonders bevorzugt unterhalb von 500 nm annehmen können.

Wie bereits erwähnt, umfasst das vorgeschlagene mikro-optomechanische System sowohl mindestens ein optisches Subsystem als auch mindestens eine optomechanische Struktur. Der Begriff des "mikro-optischen Subsystems" oder einfach des "optischen Subsystems" bezieht sich hierbei auf eine optische Anordnung, welche mindestens eine mikro-optische Komponente umfasst, die in Form mindestens einer Einheit bereitgestellt wird und die vorzugsweise in der Lage ist, ein optisches Aktor- oder Sensorsignal zu erzeugen, zu empfangen, zu verarbeiten oder zu transportieren. So kann das optische Subsystem beispielsweise über ein Array optischer Fasern wie ein- oder Mehrmodenfasern oder eine optische Faser mit mehreren Faserkernen (Multikernfaser) verfügen. Alternativ oder zusätzlich kann das optische Subsystem einen optischen Stecker oder ein Steckersystem aufweisen, welches sich auf ein Faserarray oder eine Multikernfaser befestigen lässt. Weitere faseroptische Komponenten sind möglich. Weiterhin kann in dem optischen Subsystem ein integriert-optischer Chip (engl. *Photonic Integrated Circuit,* PIC), der Lichtwellenleiter, insbesondere Siliziumwellenleiter, Siliziumnitrid-Wellenleiter, dotiertes Glas, Glaswellenleiter oder Indium-Phosphid-Wellenleiter umfasst, vorgesehen sein. Das optische Subsystem kann weitere optische Komponenten, insbesondere Laser; Verstärker, bevorzugt Halbleiterverstärker; optische Resonatoren oder Fotodioden, umfassen. Weiterhin kann das optische Subsystem eine oder mehrere zuvor durch Replikation hergestellte optische Komponenten aufweisen. Weiterhin kann es sich bei dem optischen Subsystem auch um eine unten näher beschriebene optomechanische Struktur handeln. Weitere Ausgestaltungen des optischen Subsystems sind denkbar. Weiterhin kann das optisches Subsystem oder eine sich darin befindliche optische Komponente oder andere, mittels eines 3D-direktschreibenden Verfahrens hergestellte Strukturen darstellen oder aufweisen. Das optische Subsystem kann hierbei derart ausgestaltet sein, dass ein optisches Signal, welches von dem optischen Subsystem ausgeht, wieder in dasselbe optische Subsystem oder in ein weiteres optisches Subsystem zurückgeführt werden kann. Ein Zurückführen des optischen Signals kann insbesondere durch Reflexion, Beugung oder Brechung an einer optomechanischen Struktur bewirkt werden.

Das vorliegende optische Subsystem ist dahingehend eingerichtet, dass es mindestens ein optisches Aktorsignal auskoppeln kann, wobei eine Einkopplung mindestens eines optischen Sensorsignals in dasselbe optische Subsystem oder, alternativ oder zusätzlich, in ein weiteres optisches Subsystem erfolgen kann. Bei dem optischen Aktorsignal und dem optischen Sensorsignal kann es sich um dasselbe optische Signal handeln oder, bevorzugt, um zwei voreinander verschiedene optische Signale. Der Begriff des "optischen Signals" bezeichnet hierbei ein physikalisch erfassbares Messsignal, welches auf einer elektromagnetischen Trägerwelle, die für die vorliegende Erfindung insbesondere eine Wellenlänge in optischen Bereich und/oder im Bereich des nahen, des mittleren und/oder des fernen Infrarots und/oder im Terahertz-Bereich und/oder im Mikrowellenbereich des elektromagnetischen Spektrums aufweisen kann, ausgesandt oder empfangen werden kann. Hierbei kann in der Regel zwischen dem optischen Aktorsignal und dem optischen Sensorsignal unterschieden werden. Bei dem "optischen Sensorsignal" handelt es sich um ein optisches Signal, welche zumindest eine Sensorfunktion ausüben kann, wobei der Begriff der "Sensorfunktion" dahingehend zu verstehen ist, dass das optische Sensorsignal von einem optischen Sensorelement emittiert wird und Informationen trägt, welche in Beziehung mit einer durch das optische Sensorelement ermittelten Messgröße steht. Im Gegensatz hierzu handelt es sich bei dem "optischen Aktorsignal" um ein weiteres optisches Signal, welches zumindest eine Aktorfunktion ausüben kann, wobei der Begriff der "Aktorfunktion" eine Anweisung beschreibt, welche mittels des optischen Aktorsignals ausgelöst werden kann. In einer besonderen Ausgestaltung kann ein optisches Signal sowohl das optische Aktorsignal als auch das optische Sensorsignal umfassen und somit sowohl eine Aktorfunktion als auch eine Sensorfunktion aufweisen. In einer besonderen Ausgestaltung kann das optische Subsystem zusätzlich zur Erzeugung mindestens eines weiteren optischen Aktorsignals eingerichtet sein, das insbesondere mit einem Teilbereich der optomechanischen Struktur in Wechselwirkung treten kann. In einer weiteren besonderen Ausgestaltung kann das optische Subsystem zusätzlich zu einem Nachweis mindestens eines weiteren optischen Sensorsignals eingerichtet sein, das insbesondere mit einem Teilbereich der optomechanischen Struktur in Wechselwirkung getreten ist. Das optische Subsystem kann darüber hinaus strahlformende optische Elemente aufweisen, welche zu einer Modifikation einer Ausbreitungsrichtung und/oder einer Form des von dem optischen Subsystem abgestrahlten Lichts und/oder einzukoppelnden Lichts eingerichtet sind.

Im Gegensatz hierzu umfasst die "mikro-optomechanische Struktur" oder einfach die "optomechanische Struktur" mindestens eine mikro-optische Komponente als auch mindestens eine mikro-mechanische Komponente. Weitere Komponenten, insbesondere elektronische oder elektromechanische Bauteile oder auch weitere optische oder mechanische Komponenten, können zusätzlich vorhanden sein. Erfindungsgemäß ist die optomechanische Struktur mittels eines direktschreibenden Mikrostrukturierungsverfahrens in direktem Kontakt mit dem optischen Subsystem aus einem Photoresist hergestellt. Der Begriff des "direktschreibenden Mikrostrukturierungsverfahrens" umfasst hierbei ein derartiges Verfahren, welches eine Struktur, die in Form eines Datensatzes vorliegt, ohne Anwendung einer zuvor hergestellten Maske in eine physikalische Struktur umsetzen kann. Der Begriff "direktschreibend" bezeichnet hierbei eine unmittelbare Erzeugung der Struktur in dem dafür vorgesehenen Material. Das hier eingesetzte direktschreibende Verfahren kann bevorzugt ausgewählt sein aus einem lithographischen Verfahren oder einem additiven Verfahren, insbesondere aus einer Gruppe umfassend direktschreibende Ultraviolett-Lithographie, Elektronenstrahl-Direktschreiben, Zwei-Photonen-Polymerisation, StereoLithographie und Tintenstrahldrucken. Durch den Einsatz des direktschreibenden Verfahrens sind optomechanische Strukturen, welche über nahezu beliebige dreidimensionale Formen mit Auflösungen auf Mikrometer- und/oder Nanometerskala verfügen können, bei direktem Kontakt mit dem optischen Subsystem in einem einzigen Verfahrensschritt oder, optional, auch in mehreren Verfahrensschritten herstellbar. Eine Einrichtung für die Herstellung der optomechanischen Struktur kann die Position des optischen Subsystems genau erfassen. Durch diese hohe Ausrichtgenauigkeit vor oder während der Herstellung der optomechanischen Struktur in Bezug auf das optische Subsystem kann eine nachträgliche Ausrichtung der optomechanischen Struktur zu dem optischen Subsystem entfallen. Der Begriff "direkter Kontakt" bezeichnet hierbei ein unmittelbares Aneinandergrenzen der optomechanischen Struktur und des optischen Subsystems. Die vorgeschlagenen mikro-optomechanisches Systeme können somit klassische optomechanische Systeme im Hinblick auf Kompaktheit und Robustheit übertreffen und damit gänzlich neue Anwendungsgebiete eröffnen.

In einer bevorzugten Ausführung kann die optomechanische Struktur über unterschiedliche Teilbereiche verfügen, welche mittels des mit veränderlichen Parametern ansteuerbaren, direktschreibenden Mikrostrukturierungsverfahrens und/oder von mindestens zwei sequentiell angewandten direktschreibenden Mikrostrukturierungsverfahren herstellbar sind, insbesondere in einem zusätzlichen, dem direktschreibenden Mikrostrukturierungsverfahren mittelbar oder unmittelbar vor- oder nachgelagerten Fertigungsschritt. Hierbei kann vorzugsweise ein in dem Mikrostrukturierungsverfahren eingesetzter Fotolack durch zusätzliche Komponenten vor oder nach dem jeweiligen Herstellungsschritt ergänzt sein. Hierdurch kann es zu unterschiedlichen Reaktionen der unterschiedlichen Teilbereiche bei Einstrahlung des Lichts kommen, insbesondere durch eine unterschiedliche Ausdehnung bei Aufheizung, durch einen Phasenübergang und/oder eine unterschiedliche photochemische Ausdehnung. Insbesondere kann ein Teilbereich der optomechanischen Struktur derart ausgelegt sein, dass er ein Material in die Lage versetzt, bei Licht oder Wärmeeintrag eine hohe Längenausdehnung aufzuweisen. Dies kann beispielsweise durch eine für diesen Zweck eingerichtete Oberflächenstrukturierung des Teilbereichs der optomechanischen Struktur herbeigeführt werden, durch welche einem nachträglich aufgebrachten Material auf molekularer Ebene eine Ordnung aufgeprägt werden kann. Alternativ oder zusätzlich kann in den unterschiedlichen Teilbereichen eine verschiedene Lichtabsorption auftreten, wodurch eine unterschiedliche Ausdehnung in den verschiedenen Teilbereichen der optomechanischen Struktur bewirkt werden kann. In einer besonderen Ausgestaltung kann die Form der optomechanischen Struktur von einer relativen Lage von unten näher beschriebenen optischen Koppelstellen abhängen, wobei es vorteilhaft sein kann, dass die Form der optomechanischen Struktur erst während des Fertigungsprozesses festlegbar ist, nachdem die Lage aller Teile oder eines Teils der Koppelstelle erfasst sind.

Die optomechanische Struktur kann direkt an oder auf dem optischen Subsystem angebracht sein. Alternativ kann die optomechanische Struktur auch an oder auf einer Halterung, welche fest mit dem optischen Subsystem verbunden sein kann, angebracht sein. Insbesondere kann es sich bei der Halterung auch um eine mit einem Mikrostrukturierungsverfahren für dreidimensionale Strukturen, insbesondere Zwei-Photonen-Lithographie, hergestellte Struktur handeln. Die Halterung kann im selben Verfahrensschritt wie die optomechanische Struktur herstellbar sein. In einer besonderen Ausgestaltung kann hierbei die optomechanischen Struktur an einer Facette eines optischen Subsystems angebracht sein, wobei der Begriff der "optischen Facette" oder einfach der "Facette" mindestens eine Oberfläche des optischen Subsystems bezeichnet, an welcher Licht eingekoppelt und/oder ausgekoppelt und/oder reflektiert werden kann.

In einer besonderen Ausgestaltung können nicht erwünschte Rückreflexionen von Lichtstrahlen und/oder Rückkopplungen aus der optomechanischen Struktur in das optische Subsystem vermieden werden, indem bei der Anwendung des direktschreibenden Mikrostrukturierungsverfahrens mindestens eine gekippte Fläche, welche einen Winkel in Bezug auf eine Strahlrichtung des in dem Mikrostrukturierungsverfahren eingesetzten Lichtstrahls einnimmt, erzeugt wird.

In einer bevorzugten Ausgestaltung kann eine Vielzahl von optomechanischen Strukturen auf einem oder mehreren optischen Subsystemen angeordnet sein. Diese können insbesondere dazu geeignet sein, gleichzeitig die Beschaffenheit einer Probe zu messen. Hierbei können durch eine Anregung, bevorzugt durch eine Deformation, durch das optische Aktorsignal alle optomechanischen Strukturen einzeln ansteuerbar sein.

Die vorgeschlagene optomechanische Struktur umfasst hierbei mindestens ein optisches Aktorelement sowie mindestens eine mikro-mechanische Komponente und mindestens ein optisches Sensorelement sowie mindestens eine mikro-optische Komponente. Der Begriff des "optischen Aktorelements" oder des "optomechanischen Aktorelements" bezeichnet hierbei eine Anordnung, welche durch Beaufschlagung mit Licht eine Änderung einer optomechanischen Zustandsgröße der optomechanischen Struktur bewirken kann. Der Begriff der "optomechanischen Zustandsgröße" oder einfach des "mechanischen Zustands" der optomechanischen Struktur bezieht sich hierbei auf optische zugängliche mechanische Eigenschaft der optomechanischen Struktur. Hierzu kann die optomechanische Struktur vorzugsweise eine optomechanische Teilstruktur aufweisen, deren Zustand durch eine Bewegung oder Aktuation, insbesondere in Form einer Verbiegung, Auslenkung, Ausdehnung, Position und/oder Torsion, mittels eines optischen Aktorelements verändert und mittels eines optischen Sensorelements bestimmt werden kann. Vorzugsweise kann die optomechanische Struktur hierbei durch das optische Aktorelement in Resonanz angeregt werden. Die Änderung der optomechanischen Zustandsgröße kann dabei von einer Leistung, einer Wellenlänge und/ oder einer Polarisation des durch das optische Aktorelement eingestrahlten Lichtes abhängen. Die Zustandsgröße kann sich auf eine oder mehrere physikalischen Eigenschaften der optomechanischen Struktur beziehen, insbesondere auf Position, Spannung, Elastizitätsmodul, Verbiegung und/oder Torsion eines Teilbereichs der optomechanischen Struktur. Die Änderung der Zustandsgröße kann hierbei erfolgen durch mindestens eine Wirkung, die ausgewählt sein kann aus einer Gruppe umfassend thermische Ausdehnung, Lichtdruck, chemisch-optische Wirkung, Phasenübergang einhergehend mit einer Längenänderung, Strukturänderung, Verbiegung und Aufbau einer mechanischen Spannung bei Temperaturänderung durch unterschiedliche Wärmeausdehnungs-Koeffizienten. Die Änderung der mechanischen Zustandsgröße kann hierbei auch die Position der gesamten optomechanischen Struktur betreffen, wobei zusätzlich auch das optische Subsystem mit bewegt werden kann. Weitere Arten von Wirkungen sind jedoch möglich.

Die Anregung der optomechanischen Struktur erfolgt hierbei durch das bereits beschriebene optische Aktorsignal, das von dem optischen Subsystem ausgeht und das dazu eingerichtet ist, um die optomechanische Struktur zu verformen oder in anderer Art und Weise optomechanisch anzuregen. Eine andere optomechanische Anregung kann bevorzugt durch eine optothermische Aufheizung der optomechanischen Struktur bewirkt werden. In einer besonders bevorzugten Ausführung kann die optothermische Aufheizung direkt an der Oberfläche der optomechanischen Struktur stattfinden, wozu die Oberfläche derart mit einer lichtempfindlichen Beschichtung versehen sein kann, dass möglichst viel Licht absorbiert wird. In anderen bevorzugten Ausführungen kann die Oberfläche der optomechanischen Struktur derart beschichtet sein oder einen derartig ausgestalteten Teilbereich aufweisen, dass eine mittels Beaufschlagung durch Licht (Lichteintrag) in der Beschichtung oder dem Teilbereich hervorgerufene photochemische Reaktion eine Ausdehnung oder eine Kontraktion der optomechanischen Struktur, d.h. eine Aktuation oder Bewegung der optomechanischen Struktur, bewirken kann. In einer besonders bevorzugten Ausführung kann hierzu Licht verwendet werden, welches keine Veränderungsprozesse und/oder Alterungsprozesse in der optomechanischen Struktur und/oder in dem optischen Subsystem hervorrufen kann. In dieser besonders bevorzugten Ausführung kann daher Licht verwendet werden, welches eine Wellenlänge im sichtbaren Bereich und/oder im Bereich des nahen Infrarots aufweisen kann. In einer besonderen Ausgestaltung können auch Wellenlängen im mittleren und/oder fernen Infrarot, im Terahertz-Bereich und/oder im Mikrowellenbereich verwendet werden. Weiterhin kann die optomechanische Struktur Strukturelemente aufweisen, welche über Abmessungen unterhalb der Wellenlänge des zur Anregung bzw. zum Auslesen verwendeten Lichtes verfügen, an welchen eine Absorption des eingestrahlten Lichts und damit eine Aufheizung an der betreffenden Stelle erfolgen kann. In einer weiteren Ausführung kann durch eine Mikrostrukturierung der optomechanischen Struktur eine erhöhte Aufheizung auftreten, welche die Aktuation oder Bewegung bewirken kann. In weiteren bevorzugten Ausführungen kann eine Oberflächenspannung auf der optomechanischen Struktur mittels Beaufschlagung durch Licht verändert werden, oder es kann ein Lichtdruck oder ein Licht-Drehmoment auf die optomechanische Struktur ausgeübt werden.

Bei dem "optischen Sensorelement" handelt es sich im Gegensatz zu dem optischen oder optomechanischen Aktorelement um eine Anordnung, deren optische Eigenschaften sich bei Beaufschlagung mit Licht ändern, insbesondere dann, wenn sich, wie im vorliegenden Fall, ein Zustand der optomechanischen Struktur ändert. Insbesondere kann das optische Sensorelement dahingehend ausgestaltet sein, um eine mechanische Änderung der optomechanischen Struktur oder einer damit in Beziehung stehenden Größe nachzuweisen, bevorzugt durch eine Erfassung einer Größe des eingekoppelten optischen Signals. Insbesondere kann das optische Sensorelement somit die mechanische Änderung der optomechanischen Struktur auf direktem Wege erfassen. Alternativ oder zusätzlich kann das optische Sensorelement die mechanische Änderung der optomechanischen Struktur jedoch auch auf indirektem Wege erfassen, indem das optische Sensorelement mindestens eine physikalische Größe erfassen kann, welche mit der mechanischen Änderung der optomechanischen Struktur korreliert ist, und hieraus zumindest teilweise auf die mechanische Änderung der optomechanischen Struktur schließen kann. Das optische Sensorelement kann hierzu vorzugsweise eine optische Kavität aufweisen, deren Größe und/oder optische Eigenschaften sich bei einer mechanischen Deformation der optomechanischen Struktur ändern können. Andere Ausgestaltungen des optischen Sensorelements sind jedoch möglich. Zusätzlich kann die optomechanische Struktur über weitere Einrichtungen verfügen, mit welchen Licht von dem optischen Subsystem und/oder zu dem optischen Subsystem geleitet werden kann und/oder welche für Messaufgaben eingesetzt werden können.

In einer weiteren bevorzugten Ausführung kann die optomechanische Struktur eine resonante oder interferometrische, optische Struktur aufweisen. Hierzu kann die optomechanische Struktur derart beschaffen sein, dass sich ein optischer Resonator zwischen optischen Subsystem und optomechanischen Struktur ausbildet. Dieser Resonator kann in einer weiteren Ausgestaltung vollständig oder teilweise mit einem Medium gefüllt sein, welches ein Lasing in dem optischen Resonator ermöglicht. Durch eine Verformung der optomechanischen Struktur kann der optische Resonator beispielsweise bezüglich seiner Ausdehnung verändert werden. Weiterhin kann die optomechanische Struktur ein optisches Gitter aufweisen, welches die optische Resonanz beeinflussen kann. Die optische Resonanz kann von dem optischen Subsystem gemessen und geregelt werden. In dieser Ausgestaltung kann die optomechanische Struktur derart beschaffen sein, dass mindestens ein Teilbereich der optomechanischen Struktur so von dem optischen Subsystem erwärmt werden kann, dass sich eine Veränderung der Resonanzfrequenz ergibt, welche von der Erwärmung abhängt. Alternativ oder zusätzlich kann das optische Aktorelement dazu eingerichtet sein, um eine Transmission der interferometrischen optischen Struktur zu verändern.

In einer besonderen Ausgestaltung kann eine Rückkopplung aus der optomechanischen Struktur in das optische Subsystem durch einen optischen Fabry-Perot-Resonator, welcher zwischen der optomechanischen Struktur und dem optischen Subsystem eingerichtet ist, erreicht werden. Hierbei kann Licht zwischen der optomechanischen Struktur und einer Facette des optischen Subsystems hin und her reflektiert werden. Insbesondere kann hierbei auch ein Teil des an der Facette des optischen Subsystems austretenden Lichtes wieder in das optische Subsystem zurückreflektiert werden. Durch optische Interferenz kann sich eine messbare Menge des in das optische Subsystem eingekoppelten Lichtes bei einer Veränderung der verwendeten Wellenlänge oder/oder einer Veränderung einer optischen Weglänge eines optischen Resonators zwischen dem optischen Subsystem und der optomechanischen Struktur ändern. Insbesondere kann durch die Veränderung des optischen Resonators die Position der optomechanischen Struktur messtechnisch erfasst werden.

In einer besonders bevorzugten Ausführung kann der Resonator derart beschaffen sein, dass Licht mit möglichst geringen Verlusten zwischen der optomechanischen Struktur und dem optischen Subsystem hin- und her reflektiert werden kann. Dies kann insbesondere durch eine entsprechende Beschichtung der optomechanischen Struktur und/oder des optischen Subsystems herbeigeführt werden. Hierdurch kann sich eine sehr sensitive Veränderung des in das optische Subsystem eingekoppelten Signals bei einer Veränderung der optischen Weglänge des optischen Resonators herbeiführen lassen. Diese Art der Ausgestaltung kann auch als "hohe Güte" des optischen Resonators bezeichnet werden. Weiterhin kann die optomechanische Struktur derart ausgeführt sein, dass der Betrag der Amplitude des Lichtes, welches aus dem optischen Resonator in das optische Subsystem eingekoppelt wird, genau derjenigen Amplitude entsprechen kann, mit welcher das Licht an der Facette des optischen Subsystems reflektiert wird. Hierdurch kann ein hohes Auslöschungsverhältnis (*engl.* extinction ratio) erzielt werden. Die optomechanische Struktur kann neben dem optischen Sensor- bzw. Aktorelement optische Freiformelemente enthalten, welche durch ihr Zusammenwirken insbesondere einen optischen Resonator oder ein optisches Interferometer ausbilden können. Die optische Aktuation kann somit zu einer Verformung und/oder Bewegung der Freiformelemente führen und auf diese Weise zur Abstimmung der resonanten oder interferometrischen optischen Struktur genutzt werden. Auf diese Weise können beispielsweise abstimmbare wellenlängenselektive Filter bereitgestellt werden.

Wie bereits erwähnt, kann das von dem optischen Subsystem ausgehende optische Aktorsignal dazu eingerichtet sein, um die optomechanischen Struktur derart aufzuheizen, dass es durch eine Materialausdehnung zu einer Veränderung der Form oder Größe der optomechanischen Struktur kommen kann. Insbesondere kann es sich hierbei um eine inhomogene Aufheizung und somit um eine inhomogene Materialausdehnung handeln, welche ein Verbiegen der optomechanischen Struktur bewirken kann. Insbesondere kann die inhomogene Aufheizung durch eine Oberflächenbeschichtung der optomechanischen Struktur, welche dazu ausgelegt sein kann, Licht zu absorbieren, herbeigeführt werden. Diese Beschichtung kann vorzugsweise ein Metall wie Aluminium, Chrom, Silber oder Gold umfassen. Optional kann zusätzlich eine die Haftung begünstigende Schicht aus Chrom oder Titan zwischen der optomechanischen Struktur und der Schicht aus Gold oder Aluminium aufgebracht werden.

In einer weiteren besonders bevorzugten Ausgestaltung kann die optomechanische Struktur mit einer Spitze ausgestattet sein, welche einen Radius von weniger als 100 nm, besonders bevorzugt weniger 50 nm, ganz besonders bevorzugt weniger als 25 nm, aufweisen kann. Diese Spitze kann vorzugsweise derart in die optomechanische Struktur eingebracht sein, dass sie bei einer mechanischen Wechselwirkung mit einer Probe die optomechanische Struktur mechanisch verändern kann, insbesondere verbiegt oder eine auftretende Schwingungsmode dämpfen oder in Bezug auf Ihre Resonanzfrequenz verändern kann. Diese mechanische Veränderung oder eine damit in Beziehung stehenden Größe kann von dem optischen Sensorelement in dem optischen Subsystem messtechnisch erfasst werden. In einer besonders bevorzugten Ausgestaltung kann die optomechanische Struktur hierbei derart gestaltet sein, dass sie von dem optischen Subsystem zum Schwingen angeregt werden kann, wobei die Schwingung durch eine Wechselwirkung der Spitze mit einer Probe verändert werden kann, wobei diese Veränderung von dem optischen Subsystem nachgewiesen werden kann. Besonders bevorzugt kann die optomechanische Struktur von dem optischen Subsystem derart angeregt werden, dass die optomechanische Struktur mit ihrer Resonanzfrequenz schwingt, wobei sie ganz besonders bevorzugt durch eine leicht verschobene Resonanzfrequenz angeregt werden kann. Eine mechanische Wechselwirkung der Spitze mit einer Probe kann so durch eine Messung der Schwingungsamplitude durch das optische Subsystem erfasst werden. Die um eine Spitze ergänzte optomechanische Struktur kann beispielsweise die Oberfläche einer Probe abrastern, um auf diese Weise Informationen über beispielsweise eine Topologie und/oder eine Adhäsion der jeweiligen Oberfläche zu gewinnen.

In einer weiteren bevorzugten Ausgestaltung kann die optomechanische Struktur über eine Einrichtung verfügen, mit welcher Licht aus dem optischen Subsystem an die in der optomechanischen Struktur vorhandene Spitze fokussiert werden kann. Diese Einrichtung kann besonders bevorzugt Freiformspiegel und/oder Freiformlinsen aufweisen. Weiterhin kann die Spitze der optomechanischen Struktur derart ausgeführt sein, dass sie eine Apertur am Apex der Spitze aufweisen kann. Diese Apertur kann bevorzugt einen Durchmesser von kleiner als 250 nm, besonders bevorzugt kleiner als 100 nm, ganz besonders bevorzugt kleiner als 50 nm, aufweisen. Die optomechanische Struktur kann hierbei derart ausgelegt sein, dass Licht, welches von dem optischen Subsystem an die Spitze fokussiert wird, durch die Apertur in die optische Struktur gelangen kann. Weiterhin kann die optomechanische Struktur derart ausgelegt sein, dass eine Menge dieses Lichtes von der Beschaffenheit einer Probe abhängt, welche sich in unmittelbarer Umgebung der Spitze befinden kann.

Wie bereits erwähnt, kann die optomechanische Struktur durch mindestens ein optisches Aktorsignal, welches durch das optische Subsystem bereitgestellt werden kann, bewegt werden. Hierdurch kann vorzugsweise ein Abstand der optomechanischen Struktur zu einer Probe eingestellt werden. Alternativ oder zusätzlich kann die optomechanische Struktur derart beschaffen sein, dass eine Bewegung, welche durch das von dem optischen Subsystem ausgehende optische Aktorsignal gesteuert werden kann, durch das weitere, von dem optischen Subsystem ausgehende optische Aktorsignal in Bezug auf eine Amplitude, eine Ausbreitungsrichtung und/oder eine Phase verändert werden kann. Weiterhin kann die optomechanische Struktur auch das weitere optische Aktorsignal in Bezug auf die Amplitude, die Ausbreitungsrichtung und/oder die Phase beeinflussen. In einer weiteren, besonders bevorzugten Anordnung kann das optische Subsystem durch mindestens ein weiteres zusätzliches optisches Aktorsignal bewegt werden.

In einer weiteren bevorzugten Ausgestaltung kann die optomechanische Struktur derart ausgelegt sein, dass sie eine messbare Deformation bei einer Beschleunigung des um die optomechanischen Struktur ergänzten optischen Subsystems aufweisen kann. Hierfür kann beispielsweise eine optomechanische Struktur mit geringer Federkonstante und hoher Masse verwendet.

In einer besonderen Ausgestaltung kann die optomechanische Struktur in ihrem mechanischen Zustand durch ein, von einem optischen Subsystem erzeugtes optisches Aktorsignal, welches periodisch mit einer vorgegebenen Frequenz moduliert werden kann, beaufschlagt werden. Die Änderung des mechanischen Zustands der optomechanischen Struktur kann auch hier von dem optischen Sensorsignal des optischen Subsystems oder eines weiteren optischen Subsystems nachgewiesen werden. Durch eine Veränderung des optischen Sensorsignals bei einem bestimmten optischen Aktorsignal kann eine somit physikalische Größe bestimmt werden. Dies kann insbesondere dadurch ermöglicht werden, indem nur Frequenzkomponenten des Sensorsignals ausgewertet werden, welche dem Aktorsignal oder einem ganzzahligen Vielfachen davon entsprechen.

In einer besonderen Ausgestaltung kann sich die optomechanische Struktur in einem Fluid, dessen Dichte zu bestimmen ist, befinden. Hierbei kann die Veränderung der Resonanzfrequenz als Messgröße für die Bestimmung der Dichte des Fluid dienen. Die Form der optomechanischen Struktur kann mit einer bekannten Frequenz periodisch moduliert werden, so dass sich auch der optische Resonator und damit das optische Sensorsignal, periodisch verändern kann. Durch eine Filterung mit der bekannten Modulationsfrequenz kann das Signal von etwaigen Störsignalen getrennt werden. Durch eine Veränderung der Anregungsfrequenz des Aktorsignals und gleichzeitiger messtechnischer Erfassung des Sensorsignals kann die Resonanzfrequenz bestimmt werden, welche von der Dichte des Fluids abhängt. Weiterhin kann eine Vielzahl von optomechanischen Strukturen mit unterschiedlichen Formen verwendet werden, um weitere Eigenschaften des Fluids zu bestimmen oder um physikalische Größen wie Dichte oder Viskosität, welche beide einen Einfluss auf die Resonanz ausüben können, voneinander unterscheiden zu können. In diese Ausführung kann die optomechanische Struktur zudem derart beschaffen sein, dass damit auch dynamische Eigenschaften, wie die Strömungsgeschwindigkeit des Fluids, erfasst werden können. Weiterhin kann der optische Resonator, welcher sich zwischen der optomechanischen Struktur und dem optischen Subsystem befindet, für eine Charakterisierung des Fluids genutzt werden. In dieser Ausgestaltung kann die optomechanische Struktur insbesondere für einen Betrieb in einer Flüssigkeit ausgelegt sein. Die Auslegung kann sich hierbei dadurch auszeichnen, dass die Resonanzfrequenz nur geringfügig von der Viskosität des sie umgebenden Fluids abhängt. Die Auslegung kann beispielsweise durch eine Form der optomechanischen Struktur bedingt sein, welche eine hohe Steifigkeit und/oder geringe Wechselwirkung mit dem Fluid bedingt.

In einer besonders bevorzugten Ausgestaltung kann das optische Subsystem mindestens eine optische Koppelstelle, welche zu einer Einkopplung und/oder zu einer Auskopplung des optischen Aktorsignals und/oder des optischen Sensorsignals eingerichtet ist, aufweisen. Hierbei können die Einkopplung und/oder die Auskopplung des optischen Aktorsignals und des optischen Sensorsignals an ein- und derselben optischen Koppelstelle oder, bevorzugt, an mindestens zwei gesonderten optischen Koppelstellen ausführbar sein.

Der Begriff der "optischen Koppelstelle" beschreibt im vorliegenden Zusammenhang einen Teilbereich des optischen Subsystems, durch den die optomechanische Struktur mit Licht beaufschlagt werden kann und/oder durch von der optomechanischen emittiertes oder zurückgestreutes Licht empfangen werden kann. Dabei kann es sich z.B. um eine optische Aus- oder Eintrittsfacette einer Glasfaser, eines integriert-optischen Wellenleiters, oder um komplexere Abstrahlstrukturen wie z.B. optische Gitterkoppler, Richtkoppler, getaperte Wellenleiter o.ä. handeln. Weitere Beispiele von optischen Koppelstellen umfassen Lichtaus- und Eintrittsfacetten von oberflächenemittierenden Bauteilen wie z.B. vertikal emittierenden Lasern (*engl.* Vertical-Cavity Surface Emitting Lasers, VCSEL) oder Fotodetektoren. Optische Koppelstellen können auch in Form von großflächigen transparenten Substraten wie z.B. Glasplättchen oder Austrittsfenstern von Lithographie-Objektiven vorliegen, auf denen die optomechanische Struktur verankert werden kann. Eine Genauigkeit, mit der die optomechanische Struktur relativ zu der mindestens einen optischen Koppelstelle herstellbar ist, kann mittels des vorliegenden Verfahrens auf mindestens 500 nm, bevorzugt auf mindestens 100 nm, besonders bevorzugt auf mindestens 50 nm, eingestellt werden.

In einem weiteren Aspekt betrifft die vorliegende Erfindung ein Verfahren zur Herstellung eines mikro-optomechanisches Systems. Das erfindungsgemäße Verfahren umfasst hierbei die folgenden Schritte a) und b), welche vorzugsweise in der angegebenen Reihenfolge durchgeführt werden, wobei die beiden Schritte zumindest teilweise gleichzeitig ausgeführt werden können:
a) Bereitstellen mindestens eines optischen Subsystems, wobei das optische Subsystem zu einer Abstrahlung mindestens eines optischen Aktorsignals und zu einem Empfang mindestens eines optischen Sensorsignals eingerichtet ist; und
b) Herstellen mindestens einer optomechanischen Struktur aus einem Photoresist mittels eines direktschreibenden Mikrostrukturierungsverfahrens in direktem Kontakt mit dem optischen Subsystem derart, dass in der optomechanischen Struktur mindestens ein optomechanisches Aktorelement und mindestens ein optisches Sensorelement erzeugt werden,
wobei das optische Aktorelement in Wechselwirkung mit dem optischen Aktorsignal zu einer Änderung eines mechanischen Zustands der optomechanischen Struktureingerichtet ist, und wobei das optische Sensorelement in Wechselwirkung mit dem optischen Sensorsignal zu einer Erfassung der Änderung des mechanischen Zustands der optomechanischen Struktur oder einer damit in Beziehung stehenden Größe eingerichtet ist.

Erfindungsgemäß erfolgt die Herstellung der optomechanischen Struktur mit Hilfe eines direktschreibenden Mikrostrukturierungsverfahrens. Wie bereits erwähnt, bezeichnet der Begriff des "direktschreibenden Mikrostrukturierungsverfahrens" ein Verfahren, welches eine Struktur, die in Form eines Datensatzes vorliegt, ohne Anwendung einer statischen oder zuvor erzeugten Maske in eine physikalische Struktur umsetzen kann. Das hier eingesetzte direktschreibende Mikrostrukturierungsverfahren kann bevorzugt ausgewählt sein aus einem lithographischen Verfahren oder einem additiven Verfahren, insbesondere aus einer Gruppe umfassend direktschreibende Ultraviolett-Lithographie, Elektronenstrahl-Direktschreiben, Zwei-Photonenpolymerisation, Stereolithographie und Tintenstrahldrucken. Das verwendete direktschreibende Mikrostrukturierungsverfahren kann sich hierbei additiver oder subtraktiver Strukturierungsverfahren bedienen. In einer besonders bevorzugten Ausprägung kann es sich dabei um Zwei-Photonen Lithographie handeln, die in Verbindung mit Negativ- oder Positiv-Photoresist verwendet wird.

Bei der Anwendung eines Negativ-Photoresists wird im Brennpunkt (Fokus) eines gepulsten Lasers hoher Spitzenintensität eine Absorption von zwei Photonen herbeigeführt, welche eine chemische Veränderung eines Fotolacks (*engl.* resist) bewirkt. Durch Belichten der gewünschten Struktur kann dadurch eine Aushärtung der gewünschten Struktur bewirkt werden. Ein nicht-belichteter Anteil des Fotolacks kann in einen weiteren Schritt, welcher auch als Entwicklungsschritt bezeichnet wird, insbesondere durch Wegspülen des unbelichteten Materials, entfernt werden, so dass nur die gewünschte, belichtete Struktur übrigbleibt. Insbesondere können auch unterschiedliche Wellenlängen und Resists verwendet werden, beispielsweise UV-Licht, fs-Pulse von 400 nm bis 1700 nm, etwa bei 1550 nm, 1030 nm oder 500 nm. Die unterschiedlichen Wellenlängen können dabei insbesondere auch in derselben Vorrichtung eingesetzt werden. So kann UV-Licht für solche Teilbereiche der optomechanischen Struktur verwendet werden, welche ein hohes Volumen, jedoch nur geringe Anforderungen an die Auflösung aufweisen und/oder welche sich in direkter Umgebung zu einem optischen Subsystem befinden.

Im Falle von Positiv-Photoresist ist das Verfahren so ausgestaltet, dass nur die belichtete Struktur aufgelöst wird und der verbleibende Rest in einem nachfolgenden Entwicklungsschritt erhalten bleibt, wofür ein geeignetes Resistmaterial verwendet wird. Durch das beschriebene Herstellungsverfahren lassen sich Strukturen mit beliebiger Form herstellen. Insbesondere können Strukturen hergestellt werden, welche dazu eingerichtet sind, um den Modenfelddurchmesser von Lichtstrahlen in nahezu beliebiger Weise zu beeinflussen (modifizieren), welche hier als strahlformende Elemente bezeichnet werden.

In einer bevorzugten Ausgestaltung auf Basis von direktschreibender Laserlithographie könnte hierbei zunächst eine Einteilung der herzustellenden optomechanischen Struktur in Ebenen erfolgen, wobei die Ebenen in bevorzugt einem Abstand von 20 nm bis 500 nm, besonders bevorzugt von 40 nm bis 200 nm, insbesondere von 50 nm und 150 nm, zueinander angeordnet sein können. Die Ebenen können insbesondere durch Linien beschrieben werden, welche einen Abstand von bevorzugt 20 nm bis 500 nm, besonders bevorzugt von 40 nm bis 200 nm, insbesondere von 50 nm bis 150 nm, aufweisen. Enden und Anfänge der Linien können in einem Datensatz durch kartesische Koordinaten beschrieben werden. Andere Darstellungsweisen sind jedoch möglich, etwa auf Basis zylindrischer Koordinatensysteme. Ein dreidimensional-direktschreibendes LaserLithographie-System kann die entsprechenden Linien abrastern und auf diese Weise eine dreidimensionale Struktur herstellen. Alternativ können Schreibstrategien angewandt werden, welche an die Form der optomechanischen Struktur angepasst sind, und bei denen beispielsweise Schreiblinien bevorzugt parallel zur Oberfläche der optomechanischen Struktur geführt werden, um eine Ausbildung von stufenförmigen Strukturen auf einer Oberfläche der optomechanischen Struktur zu verhindern. Insbesondere kann die Schreibgeschwindigkeit, und damit die Genauigkeit, einzelner Teilbereiche der optomechanischen Struktur angepasst werden. Insbesondere kann auch ein Schreibverfahren mit einer variablen Geschwindigkeit innerhalb der herzustellenden Struktur verwendet werden wobei die Laserleistung dynamisch an die Schreibgeschwindigkeit angepasst sein kann.

Alternativ zu direktschreibenden Lithographieverfahren können zur Herstellung der optomechanischen Struktur auch andere additive Fertigungsverfahren herangezogen werden, welche die Herstellung von dreidimensionalen Freiformstrukturen mit hoher Auflösung erlauben. Dazu zählen zum Beispiel andere Lithographieverfahren wie z.B. Elektronenstrahllithographie oder Stereolithographie oder auch hochauflösende Druckverfahren wie z.B. Tintenstrahldrucken. Die Auflösung der direktschreibenden Strukturierung kann dabei bevorzugt besser als 20 µm, besonders bevorzugt besser als 5 µm, und ganz besonders bevorzugt besser als 1 µm, in alle drei Raumrichtungen sein.

Schritt b) kann unter Verwendung eines direktschreibenden Laser-Lithographieverfahrens insbesondere wie folgt ausgeführt werden:
(α) Montage des optischen Subsystems im Lithographie-System und Vermessung seiner Position relativ zum Koordinatensystem des Lithographie-Systems. Hierzu können insbesondere Justiermarken auf der Oberfläche des optischen Subsystems verwendet werden. Als Justiermarker können hierbei auch typischerweise bereits vorhandene, einen weiteren Zweck erfüllende Strukturen, wie z.B. ein optisch anzubindender Wellenleiter oder eine Koppelstruktur, dienen. Die Erfassung der Justiermarken kann vorzugsweise über ein bildgebendes Verfahren, insbesondere ein kamerabasiertes Verfahren, erfolgen. Für eine Erfassung der Justiermarken in drei Dimensionen können beispielsweise auch konfokale bildgebende Verfahren verwendet werden. Es ist insbesondere möglich, Teile des optischen Strahlenganges des Lithographie-Systems sowohl zur Erfassung der Justiermarken als auch zur Belichtung der herzustellenden optomechanischen Struktur zu verwenden. Die Justiermarker können insbesondere auch beleuchtete Faserkerne umfassen. Weiterhin können die Justiermarker auch vom Lithographie-System beleuchtete Wellenleiter umfassen.
(β) Herstellung der entworfenen optomechanischen Struktur in einem lokalen Koordinatensystem des optischen Subsystems. Die optomechanischen Struktur kann dabei fest mit dem jeweiligen zugehörigen optischen Subsystem verbunden sein. Die Positioniergenauigkeit, mit welcher die optomechanische Struktur auf dem optischen Subsystem erzeugt werden kann, kann dabei bevorzugt besser 10 µm, besonders bevorzugt besser als 2 µm, insbesondere besser als 500 nm sein. Zur Erzielung dieser Positioniergenauigkeit können Justiermarken verwendet werden, die auf dem optischen Subsystem angebracht sind und deren Relativposition in Bezug auf die Koppelstellen des optischen Subsystems sehr genau bekannt ist, wobei die Genauigkeit bevorzugt besser als 10 µm, besonders bevorzugt besser als 2 µm, insbesondere besser als 500 nm, ist. Diese Justiermarken können während des Lithographie-Schrittes mit hoher Genauigkeit erfasst werden, wobei die Genauigkeit bevorzugt besser als 10 µm, besonders bevorzugt besser als 2 µm, insbesondere besser als 500 nm, ist. Die Herstellung der optomechanischen Struktur kann direkt an oder auf dem optischen Subsystem erfolgen. Alternativ kann die Herstellung der optomechanischen Struktur auch an oder auf einer Halterung erfolgen, welche fest mit dem optischen Subsystem verbunden sein kann. Insbesondere kann es sich bei der Halterung auch um eine mit einem Mikrostrukturierungsverfahren für dreidimensionale Strukturen, insbesondere Zwei-Photonen-Lithographie, hergestellte Struktur handeln. Die Herstellung der Halterung kann im selben Verfahrensschritt wie die Herstellung der optomechanischen Struktur erfolgen oder in einem hierzu vorgelagerten Schritt.

Die Ausgestaltung von Schritt b) kann optional eine Vorbereitung des optischen Subsystems vorsehen, welche beispielsweise eine geeignete Oberflächenmodifikation durch einen Haftvermittler oder ein Aufbringen von Halterungen mit verankernder Wirkung enthält. Alternativ oder zusätzlich kann eine Zwischenschicht zwischen dem optischen Subsystem und der optomechanischen Struktur aufgebracht werden, wobei die Zwischenschicht als Haltestruktur und/oder als Haftvermittler dienen kann. Hierbei kann eine reflexionsmindernde oder reflexionserhöhende Beschichtung auf mindestens eine Oberfläche des optischen Subsystems aufgebracht werden. Die Beschichtung kann insbesondere auch durch Aufbringen des gleichen Resistmaterials, aus welchen die optomechanische Struktur besteht, erfolgen. Dafür kann beispielsweise ein Tropfen Resist auf das optische Subsystem aufgebracht und durch ultraviolettes Licht ausgehärtet werden. Anschließend kann weiteres, flüssiges Resistmaterial aufgebracht werden und in einem direktschreibenden Verfahren strukturiert werden.

In einer weiteren Ausgestaltung kann die Herstellung der optomechanischen Struktur derart erfolgen, dass diese zunächst an einer Vielzahl zusammenhängender optischen Subsystemen erzeugt werden, bevor ein Vereinzelungsschritt zur Vereinzelung der optischen Subsysteme zur jeweiligen Weiterverwendung in einem oder mehreren optischen Systemen ausgeführt wird. So lassen sich beispielsweise optomechanische Strukturen auf oberflächenemittierenden Bauteilen besonders effizient herstellen, solange die Bauteile noch in Form eines Wafers vorliegen, der erst nach dem Schreiben der optomechanischen Strukturen in Einzelelemente zerlegt wird. Alternativ kann die Herstellung der optomechanischen Strukturen an zuvor vereinzelten, aber in Array-Form vorliegenden optischen Subsystemen durchgeführt werden.

In einer weiteren Ausgestaltung werden Maßnahmen ergriffen, um die Maßhaltigkeit der optomechanischen Struktur zu erhöhen. Diese können beispielsweise in einer Vorkompensation systematisch auftretender fertigungsbedingter Abweichungen oder in einer Nachbehandlung der hergestellten Struktur bestehen. Die Nachbehandlung kann dabei chemische, optische und thermische Methoden sowie eine Kombination aller Methoden beinhalten.

In einer weiteren Ausgestaltung kann die Herstellung der optomechanischen Struktur auf einem zuvor durch Replikation hergestellten optischen Subsystem, wie beispielsweise im Spritzgussverfahren hergestellten Mikrooptiken, Stecker-Systemen oder in Replikation hergestellten optomechanischen Strukturen, erfolgen.

In einem bevorzugten Verfahren lässt sich eine durch die optomechanische Struktur umfasste Spitze insbesondere auch aus einem in einem nachträglichen Schritt hinzugefügten Material herstellen. Nachträglich bedeutet hierbei nach der Herstellung der optomechanischen Struktur. Hierbei kann besonders bevorzugt ein Material verwendet werden, welches resistent gegen Abrieb und Verschleiß ist. Besonders bevorzugt wird hierbei ein Material, eine Materialanordnung oder eine Materialkombination verwendet, die einen geringen Spitzenradius aufweist und/oder die während eines mechanischen Kontakts mit einer Probe einen sich verringernden Spitzenradius aufweist ("selbstschärfend"). Weiterhin kann die Spitze plasmonische Resonanzen aufweisen oder ein Diamant sein oder ein Diamant mit einer Stickstoff-Valenz sein (*engl.* nitrogen vacancy diamond defects, NV centres). In einem alternativen Verfahren zur Herstellung der um eine Spitze ergänzten optomechanischen Struktur kann die Spitze im gleichen Herstellungsschritt wie die optomechanischen Struktur hergestellt werden. In einem bevorzugten Verfahren für die Herstellung einer Apertur an der Spitze kann die optomechanische Struktur mit Metall beschichtet, beispielsweise bedampft oder besputtert werden. Anschließend kann die Apertur durch ein subtraktives Mikrostrukturierungsverfahren geöffnet werden. Alternativ kann die Spitze auch in mechanischen Kontakt mit einer Probe gebracht werden, so dass sich durch die Spitze-Proben-Wechselwirkung eine Öffnung der Metallschicht an der Spitze ergeben kann.

Für weitere Einzelheiten in Bezug auf das vorliegende Verfahren zur Herstellung eines mikro-optomechanisches Systems wird auf die übrige Beschreibung des mikro-optomechanischen Systems verwiesen. Insbesondere sind darin beschriebene besondere Ausgestaltungen auch mit dem vorliegenden Verfahren herstellbar.

### Vorteile der Erfindung

Die vorliegende Erfindung weist eine Reihe von Vorteilen gegenüber den aus dem Stand der Technik bekannten Verfahren und optischen Systemen auf. Ein wesentlicher Vorteil des vorliegenden Verfahrens betrifft dessen universelle Anwendbarkeit. Mittels eines dreidimensional-direktschreibenden Lithographieverfahrens oder eines vergleichbaren hochauflösenden additiven Fertigungsverfahren wird es möglich, mikro-optomechanische Strukturen mit nahezu beliebiger Formgebung mit sehr hoher Auflösung herzustellen.

Dadurch ist es möglich, optomechanische Strukturen für einen weiten Bereich an Anwendungen bereitzustellen. Zudem lassen sich auch sehr komplexe optomechanische Systeme realisieren, da es wenige herstellungsbedingte Einschränkungen der Formgebung gibt. Weiterhin ist eine hohe Flexibilität der optomechanischen Struktur gegeben. Diese kann beispielsweise in Bezug auf ihre mechanische Resonanzfrequenz, mechanische Federkonstante und ihre optischen Eigenschaften bedingt durch die Formgebung angepasst werden. Insbesondere ist auch eine Veränderung der optomechanischen Struktur durch ein Signal des optischen Subsystems möglich, welches dazu führt, dass die optomechanische Freiformstruktur immer im idealen Arbeitspunkt betrieben werden kann.

Weiterhin ist es möglich, die optomechanischen Struktur an das optische Subsystem anzupassen, was zum Beispiel dann wichtig ist, wenn ein optischer Resonator zwischen der optomechanischen Struktur und dem optischen Subsystem vorhanden sein soll. In manchen Fällen ist durch die Herstellung mit Hilfe eines direktschreibenden Fabrikationsverfahrens außerdem eine hohe Reproduzierbarkeit gegeben, was sich positiv auf eine fabrikationsbedingte Streuung der Maßhaltigkeit sowie optischen und mechanischen Eigenschaften der realisierten Systeme und Strukturen auswirkt.

Die optomechanische Struktur kann durch ein optisches Aktorsignal ausgehend von dem optischen Subsystem bezüglich ihrer mechanischen Form beeinflusst werden (optomechanische Anregung). Weiterhin kann durch ein optisches Sensorsignal ebenfalls ausgehend von dem optischen Subsystem der mechanische Zustand, insbesondere Form, Position, Verbiegung und/oder Verwindung, der optischen Struktur durch das optische Subsystem messtechnisch erfasst werden, indem das optische Sensorsignal wieder in das optische Subsystem eingekoppelt wird. Weiterhin kann die optomechanische Struktur mit einem optischen Aktorsignal ausgehend von dem optischen Subsystem beaufschlagt werden, welches mit der Umgebung einer Probe und/oder dem Umgebungsmedium wechselwirken kann oder wieder in die jeweilige Probe einkoppelt und optional wieder in das optische Subsystem eingekoppelt werden kann. Weiterhin können so Materialeigenschaften der optomechanischen Struktur oder die Position der optomechanischen Struktur verändert werden.

Die vorliegende Erfindung löst damit die Aufgabe einer Integration konventioneller mikrooptischer Komponenten und Systeme, wie Laser, optische Chips (PICs), Fasern oder Faserstecker, mit sensor-aktuator optomechanischen Strukturen zu einem mikro-optomechanischen Gesamtsystem. Unter "integrieren" wird hierbei eine untrennbare, kompakte Verbindung verstanden. Das Gesamtsystem ist dadurch in der Lage, eine Vielzahl von messtechnischen Aufgabenstellungen zu bewältigen, wie die hochaufgelöste Messungen von Topographien, optischen Nahfeldern, Eigenschaften von Flüssigkeiten oder Beschleunigungen. Es kann weiterhin die Beeinflussung von optischen Signalen ausgehend von optischen Subsystemen und optischen Komponenten ermöglichen. Es kann sowohl die Möglichkeit einer optischen Aktuation als auch den Nachweis einer mechanischen Zustandsgröße aufweisen. Insbesondere können entsprechende Ausführungen sowohl für den Betrieb im Vakuum, in Luft sowie in Fluiden geeignet sein. Diese Anforderung bedingt, dass Parameter wie Federhärte als auch Form des optomechanischen Systems an die jeweilige Messumgebung angepasst werden können. Es kann insbesondere auch möglich sein, die optomechanische Struktur anwendungsspezifisch anzupassen, so dass Einzelstücke in einem sehr flexiblen Herstellungsverfahren kosteneffizient hergestellt werden können. Weiterhin kann ein automatisierter, reproduzierbarer und skalierbarer Herstellungsprozess ermöglicht werden.

Die erfindungsgemäße *in-situ* Herstellung der optomechanischen Struktur an oder auf dem optischen Subsystem weist insbesondere die im Folgenden aufgeführten Vorteile auf. So ist keine nachträgliche Montage einer Struktur notwendig, da diese an dem Ort ihrer Verwendung hergestellt wird. In diesem Zusammenhang ist es möglich, zur Erhöhung der Präzision beim Aufbau des Systems auf Markierungen auf der Oberfläche des optischen Subsystems zurückzugreifen. Durch eine hohe Präzision des vorgeschlagenen Herstellungsverfahrens und der Möglichkeit, die optomechanische Struktur bereits während der Herstellung direkt an Markierungen auf dem optischen Subsystem auszurichten, kann sich eine inhärente hohe Positionierungsgenauigkeit der optomechanischen Struktur relativ zu den zu verbindenden optischen Subsystem ergeben. Dies ist insbesondere dann der Fall, wenn für eine Vermessung der Position des optischen Subsystems dasselbe optische System verwendet wird wie für die Durchführung der Lithographie. Damit ist das vorliegende Verfahren insbesondere auch für einmodige Bauteile mit geringen Modenfelddurchmessern geeignet. Durch Verwendung eines dreidimensional direktschreibenden Lithographieverfahrens lassen sich zudem optomechanischen Strukturen mit nahezu beliebigen Formen herstellen, so dass die vorliegende Erfindung über einen weiten Einsatzbereich verfügt.

### Kurze Beschreibung der Figuren

Weitere Einzelheiten und Merkmale der vorliegenden Erfindung ergeben sich aus der nachfolgenden Beschreibung von bevorzugten Ausführungsbeispielen, insbesondere in Verbindung mit den abhängigen Ansprüchen. Hierbei können die jeweiligen Merkmale für sich alleine oder zu mehreren in Kombination miteinander verwirklicht sein. Die Erfindung ist nicht auf die Ausführungsbeispiele beschränkt.

Die Ausführungsbeispiele sind schematisch in den nachfolgenden Figuren dargestellt. Hierbei bezeichnen gleiche Bezugsziffern in den Figuren gleiche oder funktionsgleiche Elemente bzw. hinsichtlich ihrer Funktionen einander entsprechende Elemente. Im Einzelnen zeigen:
- Figur 1: eine schematische Darstellung eines Ausführungsbeispiels einer optomechanischen Struktur, herstellbar auf einem optischen Subsystem;
- Figur 2: eine schematische Darstellung eines Ausführungsbeispiels einer optomechanischen Struktur, herstellbar auf einer Facette einer optischen Faser;
- Figur 3: eine schematische Darstellung eines Ausführungsbeispiels einer optomechanischen Struktur, herstellbar auf der Facette eines optischen Subsystems; bevorzugt für AFM Messungen geeignet;
- Figur 4: eine schematische Darstellung einer AFM-Messung unter Verwendung der optomechanischen Struktur aus Figur 3;
- Figur 5: eine schematische Darstellung eines Ausführungsbeispiels einer optomechanischen Struktur, herstellbar auf der Facette eines optischen Subsystems, bevorzugt für gleichzeitige AFM- und SNOM Messungen geeignet;
- Figur 6: eine schematische Darstellung einer SNOM-Messung unter Verwendung der optomechanischen Struktur aus Figur 5;
- Figur 7: eine schematische Darstellung einer SNOM-Messung unter Verwendung der optomechanischen Struktur aus Figur 5 an einem Laser als aktive Komponente;
- Figur 8: eine schematische Darstellung eines Ausführungsbeispiels einer Vielzahl von optomechanischen Strukturen, herstellbar auf den Facetten eines optischen Subsystems; bevorzugt für AFM- und SNOM-Messungen geeignet;
- Figur 9: eine schematische Darstellung eines Ausführungsbeispiels einer optomechanischen Struktur, herstellbar auf der Facette eines optischen Subsystems; bevorzugt als integrierter optischer Modulator, Filter, Phasenschieber oder Strahlablenker geeignet;
- Figur 10: eine schematische Darstellung eines Ausführungsbeispiels einer optomechanischen Struktur, herstellbar auf der Facette eines optischen Subsystems; bevorzugt zur Vermessung von Eigenschaften einer Flüssigkeit geeignet;
- Figur 11: eine schematische Darstellung eines Ausführungsbeispiels einer optomechanischen Struktur, herstellbar auf Facetten eines optischen Subsystems; bevorzugt als strahlsteuerndes System geeignet;
- Figur 12: eine schematische Darstellung eines Ausführungsbeispiels, das eine bevorzugte Ausführung der Signalverarbeitung aufweist;
- Figur 13: eine schematische Darstellung eines Ausführungsbeispiels, in dem sich die optomechanische Struktur auf einem steckbaren System befindet;
- Figur 14: eine schematische Darstellung eines Ausführungsbeispiels, in dem die optomechanische Struktur durch eine Struktur ergänzt ist, welche bevorzugt Störsignale verhindert;
- Figur 15: eine schematische Darstellung eines Ausführungsbeispiels, in dem die optische Struktur eine Strukturierung im Sub-Wellenlängenbereich des Sensorsignals aufweist;
- Figur 16: eine schematische Darstellung eines Ausführungsbeispiels, in dem die Position einer Struktur durch ein Aktuatorsignal verändert werden kann; und
- Figur 17: eine schematische Darstellung eines Ausführungsbeispiels, in dem sich die optomechanische Struktur an einem Objektiv befindet.

### Beschreibung der Ausführungsbeispiele

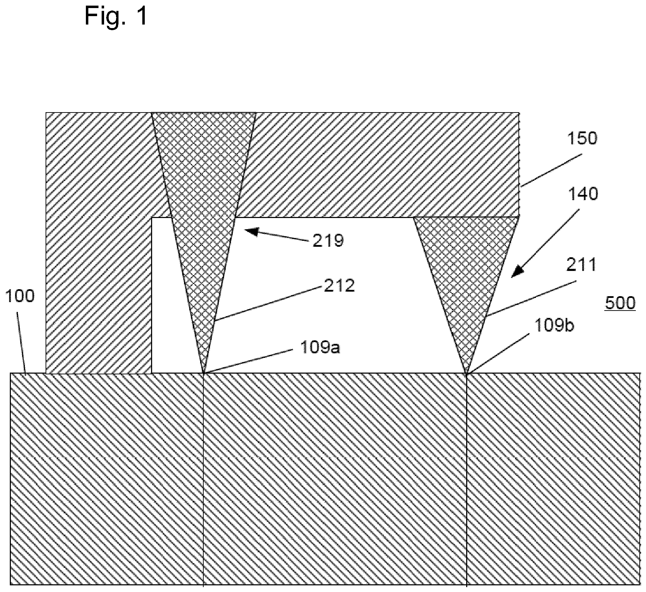

Figur 1 zeigt eine beispielhafte Darstellung eines optischen Subsystems 100, welches um eine optomechanische Struktur 150 ergänzt ist. Das optische Subsystem 100 ist dazu eingerichtet, um an einer seiner Koppelstellen 109a ein optisches Aktorsignal 212 abzustrahlen, welches die optomechanische Struktur 150 durch ein Aktorelement 219 mechanisch beeinflussen kann. Das optische Subsystem 100 ist weiterhin dazu eingerichtet, um an einer weiteren Koppelstelle 109b ein optisches Sensorsignal 211 zu empfangen. Durch ein optomechanisches Sensorelement 140 kann hierbei eine mechanische Veränderung der optomechanischen Struktur 150 nachgewiesen werden. In einer weiteren Ausführung (nicht dargestellt) können das optische Aktorsignal 212 und das optische Sensorsignal 211 an derselben Koppelstelle 109a oder 109b abgestrahlt und empfangen werden.

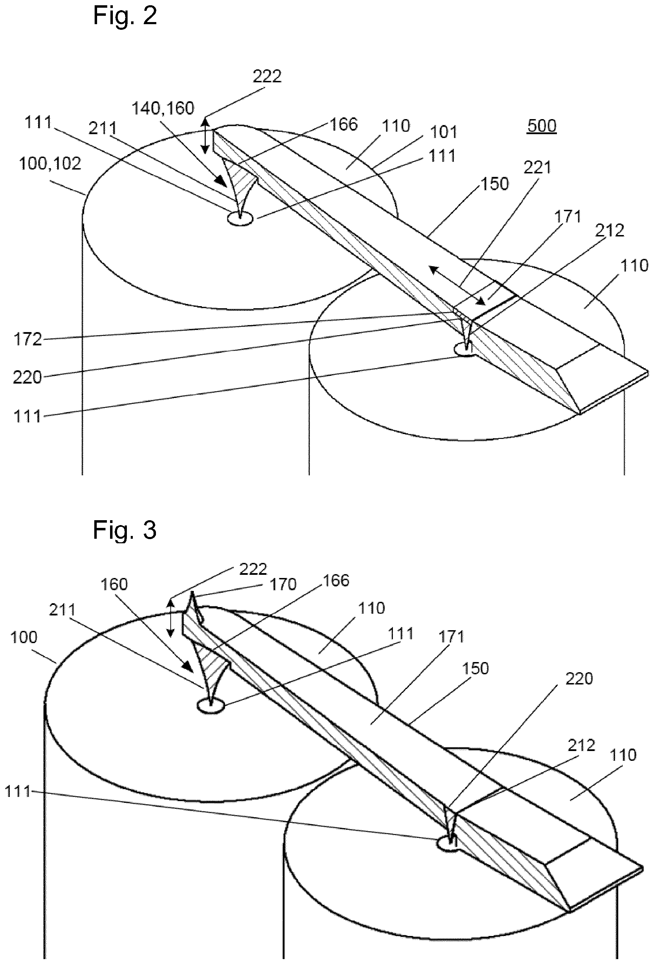

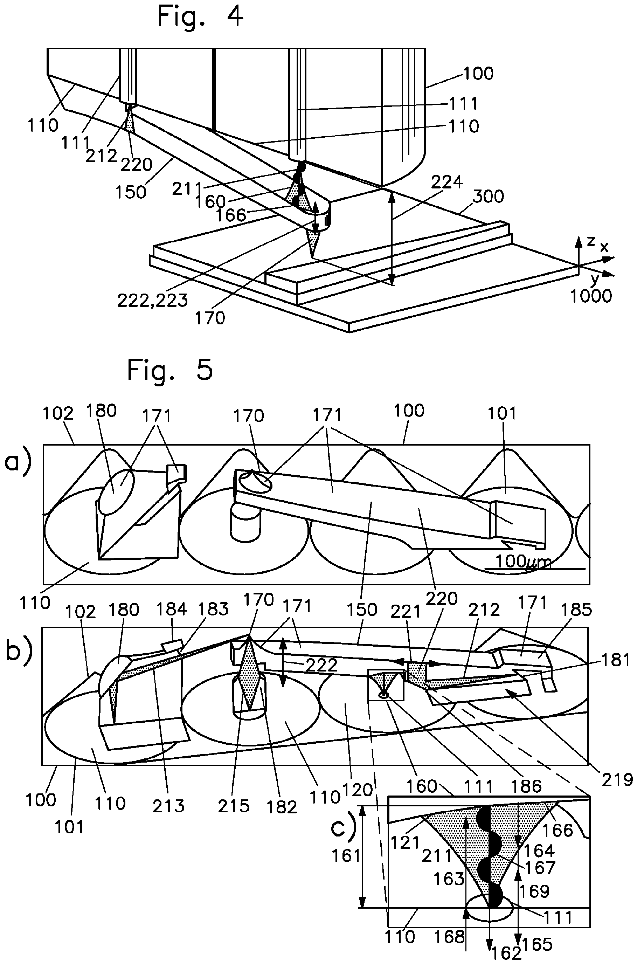

Figur 2 zeigt eine besonders bevorzugte Ausführung des um die optomechanische Struktur 150 ergänzt optischen Subsystems 100. Zur Darstellung wurde die optomechanische Struktur 150 aufgeschnitten, wobei die Schnittfläche durch eine Schraffur dargestellt ist. Das optische Sensorsignal 211 strahlt durch einen Lichtwellenleiter 111 in das optische Sensorelement 140 ein, welches in Figur 2 als beispielhaft optischer Resonator 160 ausgelegt ist. Der optische Resonator 160 bildet sich in diesem Ausführungsbeispiel zwischen einer Facette 110 des optischen Subsystems 100 und einem Freiformspiegel 166 aus. Eine besonders bevorzugte Ausgestaltung des Resonators 160 findet sich in Figur 5. Das optische Aktorsignal 212 beaufschlagt durch den Lichtwellenleiter 111 die Oberfläche der optomechanischen Struktur 150, wodurch an einer Stelle 220 einschließlich deren Umgebung eine Aufheizung bewirkt wird. Um die Aufheizung zu verstärken, kann die optomechanische Struktur 150 optional mit einer Beschichtung 171 versehen sein, welche dazu geeignet sein kann, das optische Aktorsignal 212 direkt in eine Bewegung 222 umzusetzen oder indirekt eine Umsetzung des optischen Aktorsignals 212 in die Bewegung 222 zu begünstigen. Beispielsweise können sich durch eine thermische Expansion Spannungen 221 ausbilden, welche zu der Bewegung 222 der optomechanischen Struktur 150 führen können. Die Beschichtung 171 kann sich hierbei über einen Teil der Oberfläche der optischen Struktur 150 erstrecken oder die Oberfläche der optischen Struktur 150 vollständig bedecken. Optional kann ein zweiter Teilbereich 172 der optomechanischen Struktur 150 derart beschaffen sein, dass er die Bewegung 222 begünstigt. Die Bewegung 222 kann insbesondere dadurch erreicht werden, indem mindestens ein Material in dem zweiten Teilbereich 172 einen von der übrigen optomechanischen Struktur 150 unterschiedlichen Wärmeausdehnungskoeffizienten oder Lichtabsorptions-koeffizienten aufweist. Alternativ oder zusätzlich kann es sich hierbei auch um eine Struktur unterhalb der Lichtwellenlänge des mit dem optischen Aktorsignals 212 eingestrahlten Lichts handeln, welche durch eine hohe Leistung des mit dem optischen Aktorsignals 212 eingestrahlten Lichts zumindest teilweise verkohlen und damit stark absorbierend wirken kann. Alternativ oder zusätzlich kann sich weiterhin um eine strukturelle Veränderung oder Umordnung des zweiten Teilbereichs 172 oder eine Ausrichtung mindestens eines Materials in dem zweiten Teilbereich 172 auf molekularer, mikroskopischer oder atomarer Ebene handeln, die mit Beaufschlagung durch Licht des optischen Aktorsignals 212 einhergeht, insbesondere ein Auftreten eines mit einer Längenausdehnungsänderung verbundenen Phasenübergangs, eine photothermische Reaktion oder ein Phasenübergang eines Flüssigkristallmonomers bei Beaufschlagung mit Licht oder Wärme. In dem Ausführungsbeispiel gemäß Figur 2 kann die zuvor beschriebene Reaktion zu der Spannung 221 führen, welche die Bewegung 222 bewirken kann. Die Bewegung 222 kann durch das optische Sensorelement 140 erfasst werden. Hierfür kann insbesondere der in Figur 2 schematisch dargestellte optische Resonator 160 eingesetzt werden, dessen Funktionsprinzip vorteilhaft auf einer Interferenz von Reflexionen an der Facette 110 und dem Freiformspiegel 166 basieren kann.

In Figur 3 wurde die optomechanische Struktur 150 durch eine Spitze 170 ergänzt, welche in einer bevorzugten Ausführung dasselbe Material wie die optomechanische Struktur 150 aufweist und besonders bevorzugt während demselben Herstellungsschritts wie die optomechanische Struktur 150 erzeugt wurde. Durch die Spitze 170 kann sich die optomechanische Struktur 150 insbesondere für AFM-Messungen eignen. In einer weiteren bevorzugten Ausführung kann die Spitze 170 im Vergleich zu der optomechanischen Struktur 150 ein Material mit einer höheren Abriebfestigkeit, mit einem kleineren Spitzenradius und/oder in einer selbstschärfenden Anordnung aufweisen.

Ein weiteres bevorzugtes Ausführungsbeispiel ist in Figur 4 gezeigt. Hierbei wird die Spitze 170 in die Nähe einer zu untersuchenden Probe 300 gebracht, wobei der Begriff der "Probe" ein zu untersuchendes Objekt bezeichnet. Ein Abscannen der Probe 300 kann durch Relativbewegungen der Probe 300 zu der Spitze 170 in einer xy-Ebene, welche hier durch ein Koordinatensystem 1000 definiert wird, vorgenommen werden. Weiterhin kann eine Bewegung 222, 223 der Spitze 170, welche sich aufgrund einer Verbiegung der optomechanischen Struktur 150 durch die Probe 300 ausbildet, durch den optischen Resonator 160 erfasst werden. Die Bewegung 223 kann hierbei die Topographie der Probe 300 als Funktion der xy-Koordinate darstellen. In einer weiteren, bevorzugten Ausführung kann ein z-Abstand 224 zwischen der Probe 300 an einer Kontaktstelle der Spitze 170 mit der Probe 300 durch das optische Subsystem 100 so geregelt werden, dass der z-Abstand 224 konstant bleibt. Ein Regelungssignal oder ein dies Reglung quantifizierendes Signal kann die Topographie der Probe 300 als Funktion der xy-Position darstellen. In einer weiteren besonders bevorzugten Ausführung kann das optische Aktorsignal 212 die Struktur an der Stelle 220 mechanisch derart beeinflussen, dass Sie als Funktion der Amplitude dargestellt durch die Bewegung 222 schwingt. Hierfür kann bevorzugt eine in Bezug auf die Zeit sinusförmige Veränderung des optischen Aktorsignals 212 verwendet werden. Die Größe der Bewegung 222 kann hierbei sowohl von der Amplitude des optischen Aktorsignals 212 als auch von der Frequenz des optischen Aktorsignals 212 bestimmt sein, wobei die Bewegung 222 umso größer ist, je näher die Frequenz des optischen Aktorsignals 212 an der Resonanz der optomechanischen Struktur 150 liegt. Bevorzugt ist eine Anregungsfrequenz des optischen Aktorsignals 212 welche in der Nähe der Resonanz der optomechanischen Struktur 150 liegt. Vorzugsweise kann während einer rasterförmigen Bewegung 223 der Probe 300 relativ zu der optomechanischen Struktur 150 der z-Abstand 224 derart geregelt werden, dass die Amplitude bevorzugt höchstens 60 %, besonders bevorzugt höchstens 75 %, insbesondere höchstens 90 %, der Amplitude 222 ohne Kontakt der Spitze 170 mit der Probe 300 beträgt. Auch hier kann das Regelsignal für den z-Abstand 224 wieder eine Topographie der Probe 300 als Funktion der xy-Position darstellen. In einer weiteren besonders bevorzugten Ausführung kann das optische Aktorsignal 212 dazu verwendet werden, um durch Aufheizen 220 die Resonanzfrequenz der Struktur 150 zu beeinflussen, wobei ein Aufheizen eine geringere Resonanzfrequenz bedeuten kann. Hierdurch lässt sich die Resonanzfrequenz genau einstellen. In einer weiteren, besonders bevorzugten Ausführung kann das optische Aktorsignal 212 dazu verwendet werden, um durch das Aufheizen 220 die Bewegung 222 derart zu steuern, dass die Amplitude der Bewegung 222 bei Abscannen der Probe in der xy-Ebene konstant bleibt, wobei das optische Aktorsignal 212 oder Anteile seiner Frequenzkomponente eine Topographie der Probe 300 als Funktion der xy-Position darstellen. Insbesondere kann das optische Aktorsignal 212 auch die Kraft, mit welcher die Spitze 170 auf die Probe 300 drückt, derart regeln, dass sie konstant bleibt.

Figur 5 stellt ein weiteres, besonders bevorzugtes Ausführungsbeispiel dar, in welchem das optische Subsystem 100 durch ein Array 102 aus Einmodenfasern 101 ausgeführt ist. Figur 5A stellt hierbei eine rasterelektronenmikroskopische Aufnahme dar, während Figur 5B eine schematische Darstellung der gleichen Ausführung zeigt. Die optomechanische Struktur 150 ist auch hier als Cantilever ausgelegt, wobei das Aktorelement 219 zwei Spiegel 181, 186 aufweist, welche das optische Aktorsignal 212 derart umleiten, dass sie die Stelle 220 aufheizen können. Hierbei können die beiden Spiegel 181, 186 von der Beschichtung 171 geschützt sein, wobei für den Spiegel 186 dies aufgrund der Position des Spiegels 186 automatisch gegeben sein, während der Spiegel 181 durch eine Abschirmstruktur 185 geschützt werden kann. Beide Spiegel 181, 186 funktionieren hier durch das Prinzip der totalen internen Reflexion. Für dieses Reflexionsprinzip ergibt sich der Vorteil gegenüber einer Reflexion an einer Metallschicht, wodurch auch hohe Leistungen und/oder Intensitäten verwendet werden können, da das Metall eine starke Aufheizung bewirken kann, wodurch es insbesondere zu einer thermischen Zerstörung des Spiegels 181 kommen kann, da hier die Leistungsdichte des optischen Aktorsignals 212 sehr hoch ist. Metallische Beschichtungen können jedoch auch bei geringeren Intensitäten eingesetzt werden. Weiterhin befindet sich auf der Facette 110 in der Ausführung gemäß Figur 5 eine Freiformlinse 182, welche sich dafür eignet, Licht von der Spitze 170 in das optische Subsystem 100 in Form des optischen Aktorsignals 212 einzukoppeln. In einer besonders bevorzugten Ausführung kann hierbei die Beschichtung 171 des Cantilevers an der Spitze 170 in Form einer beispielsweise kreisrunden Apertur unterbrochen sein. Die Apertur hat bevorzugt einen Durchmesser von weniger als 500 nm, besonders bevorzugt von weniger als 250 nm, insbesondere von weniger als 50 nm. In einer weiteren, bevorzugten Ausführung kann das optische Subsystem 100 ein drittes optisches Signal 213 bereitstellen, welches die Spitze 170 seitlich beleuchten oder durch den Apex der Spitze 170 austreten kann. Das Signal 213 kann hierbei von einem Teilbereich der optomechanischen Struktur, welche einen Freiformspiegel 180 und eine Freiformlinse 183 umfassen kann, bereitgestellt werden. Hierbei kann die Freiformlinse 183 mittels einer Abschirmstruktur 184 vor nicht beabsichtigtem Bedampfen geschützt werden.

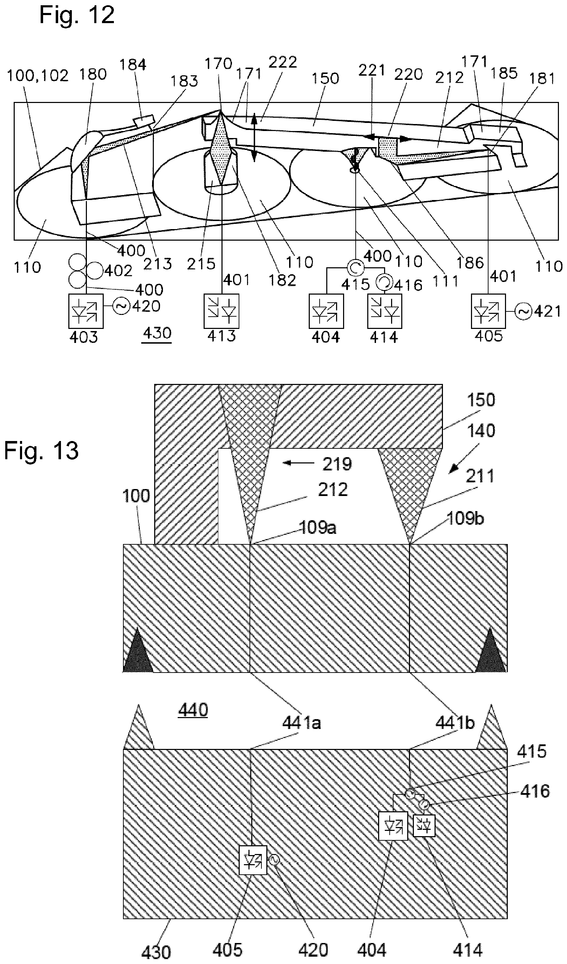

Figur 5C zeigt eine besonders bevorzugte Ausführung des optischen Resonators 160, in welcher das optische Sensorsignal 211 zwischen einem Freiformspiegel 166 und der Facette 110 reflektiert werden kann. Der Resonator 160 kann hierbei die Facette 110 beaufschlagendes Lichts 168 umfassen, welches von dem optischen Subsystem 100 bereitgestellt wird. Ein Anteil 163 des Lichts kann durch die Facette 110 transmittiert und an dem Freiformspiegel 166 mit einem Anteil 164 reflektiert werden. Ein Anteil 165 des durch die Facette 110 des optischen Subsystems 100 transmittierten Lichts, welches zuvor mindestens einmal an der optomechanischen Struktur 150 als der Anteil 164 reflektiert wurde, kann in den Wellenleiter 111 des optischen Subsystems 100 einkoppeln, während ein weiterer Anteil 169 dort reflektiert werden kann, um wiederholt den optischen Resonator 160 so durchzulaufen, dass es zu einem wiederholten Einkoppeln des Anteils 165 des Lichts kommen kann. An einem Detektor, insbesondere einer Fotodiode 414 aus Figur 12, können darüber hinaus alle Anteile 162, 165 des Lichts interferieren. Für viele Anwendungen kann hierzu ein möglichst großer Quotient aus gemessener Intensität bei destruktiver und konstruktiver Interferenz wünschenswert sein. Dieser Quotient ist dann maximal, wenn die Summe aller Amplituden der Anteile 165 des Lichts gleich der der Amplitude alle Anteile 162 des Lichts sind. Dies kann durch eine geeignete Form des Freiformspiegels 166, einer geeigneten Beschichtung 121 des Freiformspiegels 166 sowie einer geeigneten Beschichtung 120 der Facette 110 herbeigeführt werden sowie von einer Wahl einer Länge 161 des optischen Resonators 160 und einer Beschaffenheit des Wellenleiters 111 an der Facette 110. Für weitere Anwendungen kann es wünschenswert sein, dass bei einer Veränderung der Wellenlänge des optischen Sensorsignals 211 eine möglichst starke Veränderung der Interferenz der Anteile 162, 165 des Lichts am Detektor, insbesondere der Fotodiode 414, stattfinden kann. Hierfür kann entweder die Länge 161 des optischen Resonators 160 so groß gewählt werden und/oder das optische Sensorsignal 211 durchläuft möglichst viele Male den optischen Resonator 160, was durch die Freiformfläche 166, deren Beschichtung 121 und die Beschichtung 120 der Facette 110 und die Beschaffenheit des Wellenleiters 111 an der Facette 110 einstellbar ist. Ein möglichst häufiges Durchlaufen des optischen Sensorsignals 211 durch den optischen Resonator 160 kann auch dazu wünschenswert sein, um eine möglichst hohe Sensitivität der Interferenz zwischen den Anteilen 162, 165 bei einer Veränderung der Länge 161 des optischen Resonators 160, welche insbesondere durch die Bewegung 222 hervorgerufen werden kann, herbeizuführen.

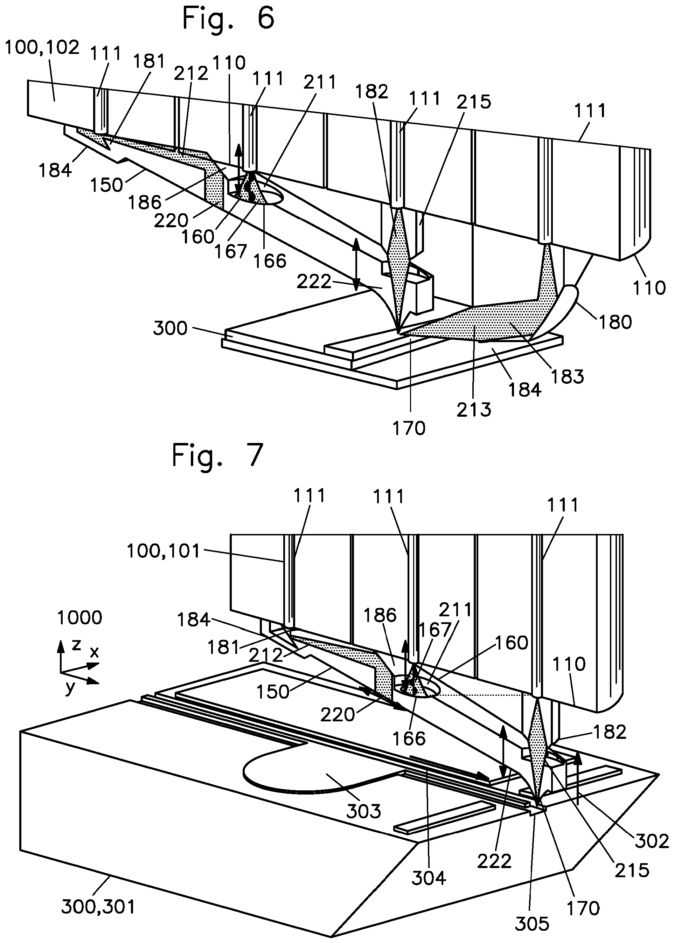

Figur 6 zeigt eine Verwendung der Ausführung gemäß Figur 5 für die räumliche Vermessung der Probe 300. Hierbei kann die Topographie der Probe 300 analog zu der Darstellung zu Figur 4 erfasst werden. Alternativ oder zusätzlich kann jedoch die Spitze 170 mit dem dritten optischen Signal 213 beleuchtet werden, so dass durch eine Wechselwirkung mit dem dritten optischen Signal 213 am Apex der Spitze 170 auch optische Informationen über die Probe 300 gewonnen werden können, welche sich über das optische Signal 215 in den Wellenleiter 111 des optischen Subsystems 100 einkoppeln lassen. In einer weiteren Ausführung kann die Spitze 170 in ihrem Inneren durch die Umkehrung des optischen Signals 215 beleuchtet werden. Das an der Spitze 170 gestreute Licht oder das durch eine Apertur am Apex der Spitze 170 emittierte Licht kann nach der Wechselwirkung mit der Probe 300 in Form des dritten optischen Signals 213, welche in diesem Fall von der Spitze 170 zum optischen Subsystem 100 hin verläuft, eingesammelt werden. Hierbei kann die Polarisation des dritten optischen Signals 213 verändert werden, so dass die Art der Wechselwirkung der Spitze 170 mit der Probe verändert werden kann.

Figur 7 zeigt ein Ausführungsbeispiel für eine Messung des in eine Richtung 302 des emittierten Lichts (Emissionsrichtung) des Lasers 301 an einer Austrittsfacette des Lasers 301. Diese kann für eine Messung an Kontaktflächen (Kontaktpads) 303 kontaktiert werden. Der Resonator 304 des zu vermessenen Lasers zeigt in eine Richtung des in Figur 7 angegebenen Pfeils und wird durch einen Spiegel 305 in die Richtung 302 reflektiert. In analoger Art und Weise können mit der Ausführung gemäß Figur 7 auch weitere Arten von Lasern und optischen Subsystemen vermessen werden, insbesondere auch solche, welche keinen Spiegel 305 aufweisen. Insbesondere kann der Laser 301 Teil eines Wafers sein, so dass hier eine Messung auf Wafer Ebene durchgeführt werden kann.

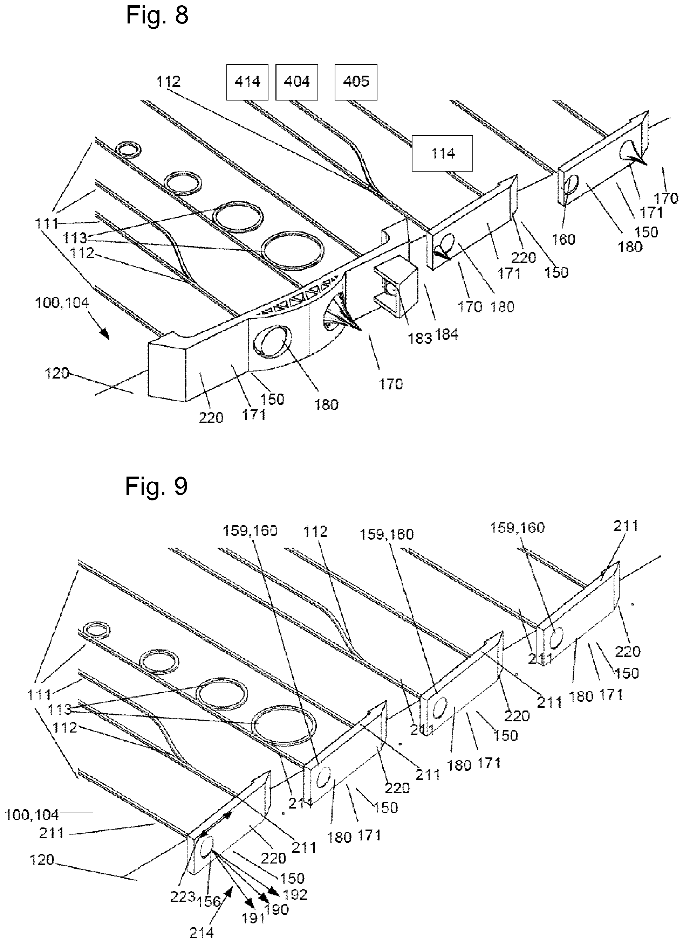

Figur 8 zeigt ein weiteres bevorzugtes Ausführungsbeispiel, in welchem eine Vielzahl von optomechanischen Strukturen 150 an der Facette 110 des optischen Subsystems 100, das hier in Form eines optischen Chips 104 vorliegt, vorhanden sind. Der optische Chip 104 verfügt über eine Vielzahl von Lichtwellenleitern 111, Filterstrukturen 113, Fotodioden 414, Sensor-Lasern 404, Aktuator-Lasern 405 und Verzweigungen 112 der Lichtwellenleiter 111. Die Laser 404, 405 und Fotodioden 414 können entweder zusammen mit dem optischen Chip 104 hergestellt oder wurden nachträglich mit dem bestehenden optischen Chip 104 verbunden werden. Die Lichtwellenleiter 111 sind dazu eingerichtet, um die optomechanischen Strukturen 150 mechanisch zu beeinflussen und ihre Verformung zu messen. Die optische Filterstruktur 113 kann das Licht von der Spitze 170 bezüglich ihrer spektralen Anteile untersuchen. Der Aktuator-Laser 405 kann, wie im vorliegenden Ausführungsbeispiel, mittels eines optischen Modulators 114 moduliert werden.

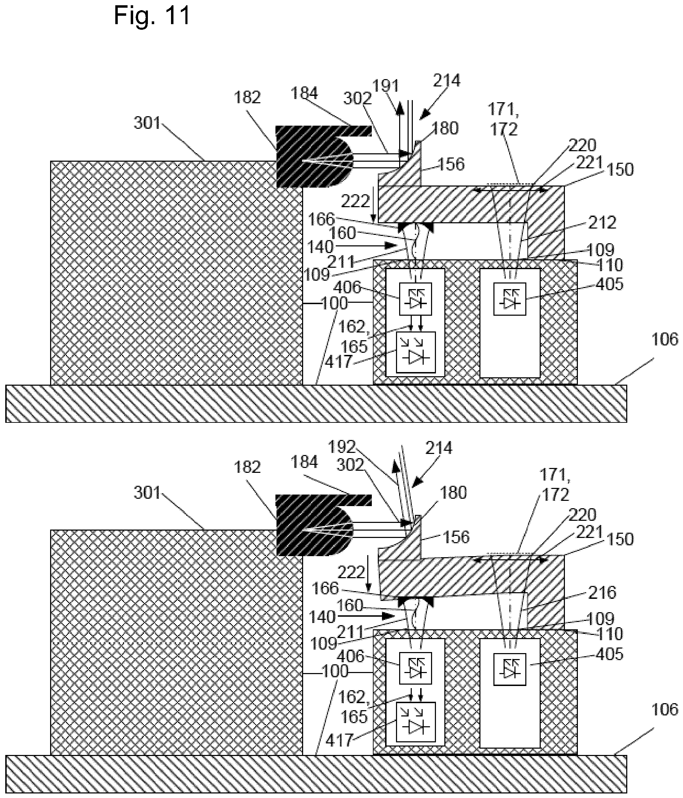

Figur 9 zeigt ein weiteres bevorzugtes Ausführungsbeispiel, in welchem die Vielzahl der optomechanischen Strukturen 150 an der Facette 110 des optischen Subsystems 100 in Form des optischen Chips 104 vorhanden sind. Der optische Chip 104 ist hier um die optomechanische Struktur 150 in Form einer optomechanischen Freiformkomponente ergänzt, welche dazu ausgelegt ist, Licht 214 in Richtungen 190, 191 und 192 abzulenken. Das Licht 214 ist dem optischen Sensorsignal 211 überlagert, ein zusätzliches Signal wie in Figur 11 oder identisch zu dem optischen Sensorsignal 211. Dieser Effekt kann durch eine geeignet geformte Struktur 156 hervorgerufen und/oder verstärkt werden, wobei in jedem Fall mindestens ein Teil des optischen Sensorsignals 211 in den optischen Chip 104 zurückgekoppelt werden kann, um die Verbiegung der optomechanischen Strukturen 150 zu erfassen. Eine weitere, besonders bevorzugte Ausführung der optomechanischen Struktur 150 verfügt über einen optischen Resonator 159, welcher mit einem lasenden Medium gefüllt ist. Hierdurch kann Laserlicht in die Richtung 190 abgestrahlt oder in den Wellenleiter 111 gekoppelt werden. Der Wellenleiter 111 kann hierzu Filterstrukturen 113 aufweisen, um eine wellenlängen-selektive Verstärkung stattfinden zu lassen, oder eine Verzweigung 112 aufweisen. Durch eine Bewegung der optomechanischen Struktur 150 aufgrund des optischen Sensorsignals 211 lässt sich die Größe des Resonators 159 verändern, wodurch eine Funktionalität eines durchstimmbaren Lasers erhalten werden kann.

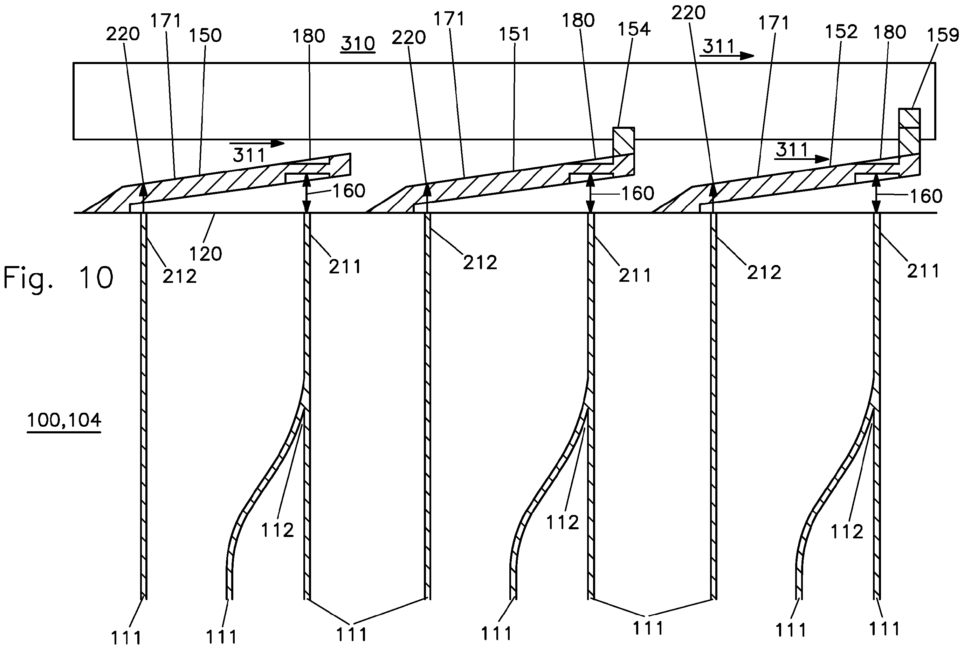

Figur 10 zeigt ein weiteres bevorzugtes Ausführungsbeispiel einer optomechanischen Struktur 150, welche insbesondere für eine Messung einer Bewegung 311 eines Fluides 310 geeignet ist und gleichzeitig Viskosität und Dichte des Fluids 310 bestimmen kann. Hierfür weisen verschiedene optomechanische Strukturen 150 unterschiedliche Teilstrukturen 154, 159 auf, welchen jeweils einen unterschiedlichen Strömungswiderstand verursachen können. Der Strömungswiderstand kann sich in unterschiedlichen Verbiegungen der optomechanischen Struktur 150, welche durch das optische Sensorsignal 211 erfasst werden können, äußern. Durch unterschiedliche Teilstrukturen 154, 159 kann hierbei zwischen Parametern wie beispielsweise Viskosität und Dichte des Fluides 310 unterschieden werden. Insbesondere können die Cantilever hierfür auch durch das optische Aktorsignal 212 zu einer resonanten Schwingung angeregt werden. Dabei kann durch die unter-schiedlichen Resonanzfrequenzen und Dämpfungen der Resonanz auf Parameter, wie Viskosität und Dichte des Fluids 310, geschlossen werden. Weiterhin kann die Beschichtung 171 derart ausgelegt sein, dass sich bestimmte Substanzen in dem Fluid 310 selektiv an den Cantilever binden können, wodurch die Resonanzfrequenz verändert wird. Hierdurch können vorzugsweise Konzentrationen von bestimmten Substanzen oder in geringen Konzentrationen vorkommenden chemischen Komponenten bestimmt werden. Zusätzlich kann die optomechanische Struktur 150 durch das optische Aktorsignal 212 zum Schwingen angeregt werden, wobei das optische Sensorsignal 211 durch einen Filter, welcher bei anderen Frequenzen als der Anregungsfrequenz sperrt, von anderen Signalen separiert werden. Hierbei kann es sich insbesondere um ein Lock-in Verfahren handeln.

Figur 11 zeigt weiteres Ausführungsbeispiel, in welchem die optomechanische Struktur 150 dazu ausgelegt ist, um das Licht 214 von einem Laser 301 abzulenken. Der Laser kann dabei insbesondere auch Teil des optischen Subsystems 100 sein. Der Laser 301 emittiert hierbei in die Richtung 302, während die optomechanische Struktur 150 derart angeordnet ist, dass sie von dem Laserlicht in der Richtung 302 beaufschlagt wird. Durch die Teilstruktur 156 der optomechanischen Struktur 150 kann das Laserlicht der ursprünglichen Richtung 302 in eine Richtung 191 abgelenkt werden. Das Laserlicht kann weiterhin durch die Bewegung 223 in eine Richtung 192 oder optional in weitere Richtungen abgelenkt werden. Dabei kann die Teilstruktur 156 der optomechanischen Struktur 150 derart beschaffen sein, dass es diese Ablenkung begünstigt. Insbesondere kann die Teilstruktur 156 so beschaffen sein, dass ein Winkel von 5° bis 60°, besonders bevorzugt von 10° bis 45°, insbesondere von 20° bis 30° zwischen den Richtungen 191, 192 auftritt. Die Bewegung 223 kann hierbei durch das Aufheizen 220, verursacht durch das optische Aktuatorsignal 212, abgestrahlt durch eine Abstrahlstruktur 115, welche vorzugsweise ein oberflächenemittierender Laser (VCSEL) sein kann, bewirkt werden. Die Bewegung 223 kann jedoch auch derart erfolgen, dass ein beliebiger Winkel zwischen den Richtungen 191, 192 erreicht werden kann.

Weiterhin kann die optomechanische Struktur 150, wie aus Figur 11 hervorgeht, mit einem Positionssensor 140 ausgestattet sein. Der Positionssensor 140 kann hierbei derart ausgestaltet sein, dass er eine möglichst genaue Erfassung einer Richtung, in welches das Laserlicht abgestrahlt wird, ermöglichen kann. In der Ausführung gemäß Figur 11 kann er hierzu über eine optische Kavität verfügen, welche zwischen der optomechanischen Struktur 150 und dem optischen Subsystem 100 angeordnet ist und welche mittels eines optischen Sensorsignals 211 beaufschlagt werden kann. Durch Interferenz kann unterschiedlich viel Licht 162, zu einer Fotodiode 417 in dem Laser 406, welcher beispielsweise als VCSEL ausgelegt ist, gelangen. Die Menge an Licht, welche von der Fotodiode 417 hierbei detektiert wird, kann insbesondere von einer Verbiegung der optomechanischen Struktur 150 abhängen. In einer besonders bevorzugten Ausführung kann die Fotodiode 417 in den Laser 406 integriert sein. Das ist Figur 11 gezeigte Ausführungsbeispiel kann anstelle der Teilstruktur 156 insbesondere mit einer Spitze 170 ausgestattet sein und dann als AFM dienen.

Figur 12 zeigt eine messtechnische Umsetzung des Ausführungsbeispiels aus Figur 5. Hierbei kann das optische Subsystem 100, im dargestellten Fall ein Faserarray 102, mit einer optischen Signalverarbeitungseinheit 430 verbunden sein. Weiterhin können die Lichtwellenleiter 111 in Form von optischen Fasern 400 vorliegen, welche die Facette 110 mit weiteren optischen Komponenten, insbesondere einem faseroptischen Polarisationskontroller 402, den Lasern 403, 404 und den Fotodioden 413, 414. Der faseroptische Polarisationskontroller 402 kann hierbei durch eine der optischen Fasern 400 mit der Fotodiode 403 verbunden sein. Weiterhin kann ein Zirkulator 415 derart mit einer der optischen Fasern 400 zur der optischen Facette 110, dem Laser 404 und dem Isolator 416 verbunden sein, dass der Zirkulator 415 Licht des Lasers 404 zu der optomechanischen Komponente 150 durchlässt, nicht jedoch zu einem Isolator 416, während Licht, welches von der optomechanischen Komponente 150eintrifft, zu dem Isolator 416 durchgelassen wird, nicht jedoch zu dem Laser 404. Der Isolator 416 lässt wiederum Licht kommend von dem Zirkulator 415 zu der Fotodiode 414 durch, jedoch nicht von der Fotodiode 414 zu dem Zirkulator 415. Weiterhin sind die Laser 403, 405 jeweils mit einem Signalgenerator 420, 421 ausgestattet, welche sich untereinander synchronisieren lassen. Weiterhin können die Fotodioden 413, 414 jeweils an einen Lock-In Verstärker angeschlossen sein.

Figur 13 zeigt eine Umsetzung, in welcher sich die optomechanische Struktur 150 auf einem optischen Subsystem 100 befindet, welches trennbar durch eine lösbare Verbindung, insbesondere eine Steckverbindung 440, mit der optischen Signalverarbeitungseinheit 430 verbunden werden kann. Die Steckverbindung 440 kann insbesondere auch Fasern 400 als Koppelstellen 441 umfassen. Bei der Steckverbindung 440 kann es sich vorzugsweise um einen Faserstecker handeln, welcher das optische Subsystem 100 mit der optischen Signalverarbeitungseinheit 430 an Stellen 431 verbinden kann. Insbesondere kann es sich hierbei um eine einen MPO (*engl.* Multipath-Push-on) Stecker handeln, d.h. einer reversiblen Verbindung welcher für Lichtwellenleiterstecker eingerichtet sind, wobei die beiden Steckerteile zueinander durch Stifte und Löcher ausgerichtet werden können. Hierdurch kann ein einfaches Austauschen des um die optomechanische Struktur 150 ergänzten optischen Subsystems 100 ermöglicht werden.

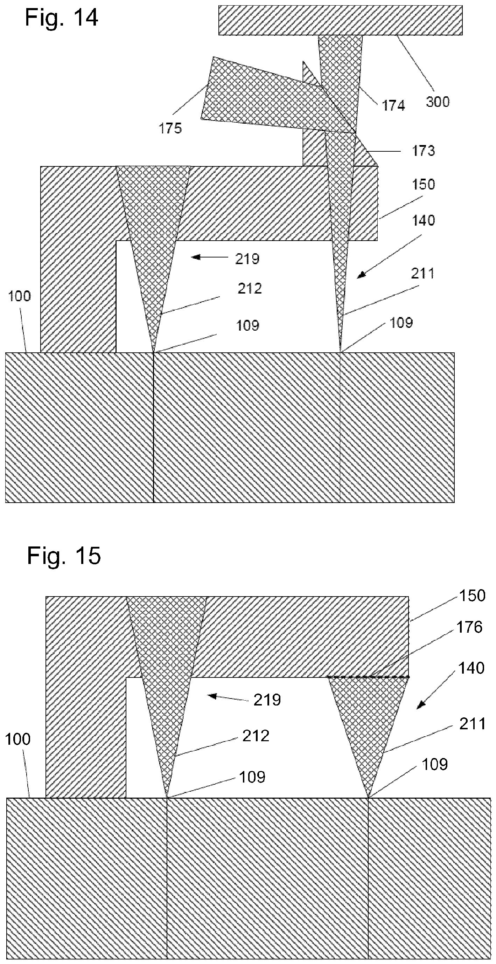

Figur 14 zeigt eine weitere Ausführung der optomechanischen Struktur 150, welche um einen dritten Teilbereich 173 ergänzt wurde, welcher eine unerwünschte Rückkopplung des optischen Sensorsignals 211 unterdrücken kann. So würde ein Anteil 174 des optischen Sensorsignals 211 ohne den dritten Teilbereich 173 an der Probe 300 reflektiert werden und an einer Stelle 109 in das optische Subsystem 100 einkoppeln. Hierdurch kann es zu einer Störung des optischen Sensorelements 140 kommen, welches dazu eingerichtete ist, die Position der optomechanischen Struktur 150 zu erfassen. Die Struktur des dritten Teilbereichs 173 kann das optischen Sensorsignal 211 insbesondere durch Reflexion, Totalreflexion und/oder Lichtbrechung derart ablenken, dass es einen Strahlverlauf 175 nimmt, von welchem es nicht zurückreflektiert werden kann. Der Strahlverlauf 175 ist vorteilhaft insbesondere derart beschaffen, dass möglichst keine Rückkopplungen in der optomechanischen Struktur 150 auftreten können.

Figur 15 zeigt eine weitere Ausführung der optomechanischen Struktur 150, welche ein diffraktives Strukturelement 176 umfasst, welches bevorzugt eine Strukturgröße unterhalb der Lichtwellenlänge des optischen Sensorsignals 211 aufweist. Hierdurch kann bevorzugt ein besonders empfindliches Sensorelement 140 hergestellt werden.

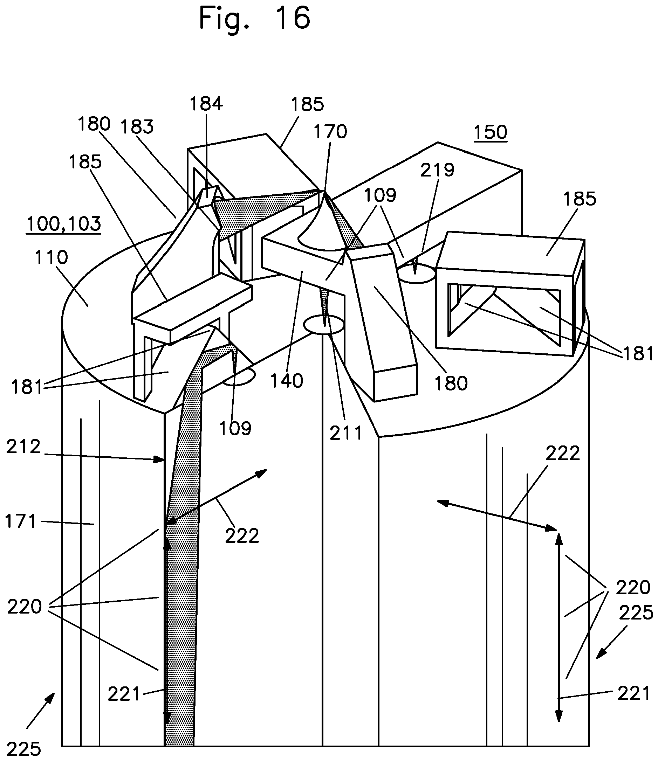

Figur 16 zeigt eine weitere Ausführung der optomechanischen Struktur 150, welche dazu geeignet ist, eine Mehrkernfaser 103 an den Stellen 220 derart aufzuheizen, dass es zu Bewegungen 222 in Form von Translationen kommt. Durch das Vorhandensein mindestens drei derartiger Aktuatoren 255 kann die optomechanische Struktur 150 in drei voneinander unabhängigen Raumrichtungen bewegt werden. In Figur 16 ist die Mehrkernfaser so aufgeschnitten, dass der Strahlverlauf des optischen Aktorsignals 212 sichtbar ist.

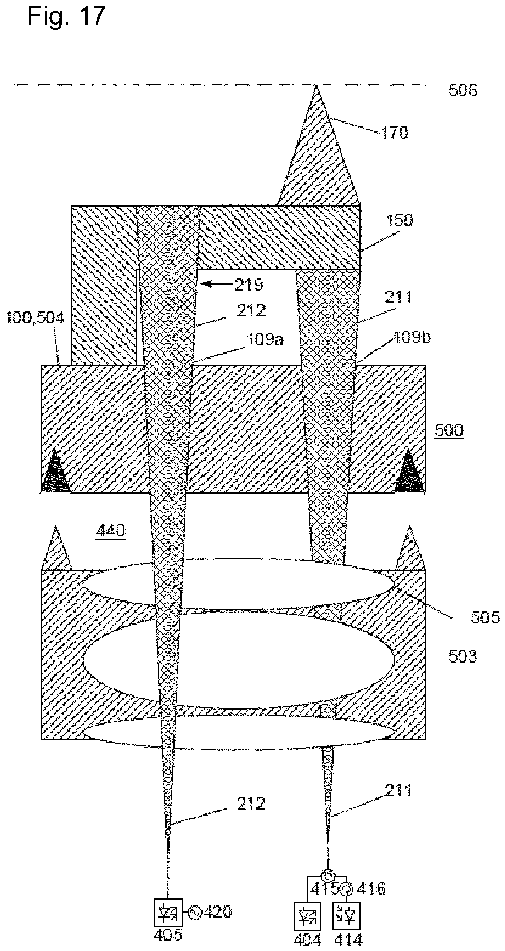

Figur 17 zeigt eine besonders bevorzugte Ausgestaltung eines mikro-optomechanischen Systems 500. Hierbei ist das optische Subsystem 100 als Komponente 504 ausgelegt, welche an einem Objektiv 503 befestigt werden kann. Bei der Komponente 504 kann es sich um ein transparentes Objekt handeln, beispielsweise einen Objektivträger oder um eine kleine Struktur, wie zum Beispiel eine Glasfaser, welche seitlich in das Bildfeld des Objektivs 503 rage kann. Die transparenten Komponente 504 kann jedoch auch direkt auf eine Linse 505 des Objektivs 503 gedruckt sein. Bei dem Objektiv 503 kann es sich um ein Objektiv einer Einrichtung für Zwei-Photonen Polymerisation handeln, welche durch eine spiegelnde Fläche sich selbst oder einen entsprechend montierten Objektivträger bedrucken kann. Bei der Komponente 504 kann es sich jedoch auch um ein Immersions-Objektiv oder um ein Luftobjektiv handeln. Die optomechanische Struktur 150 kann hierbei durch das optische Aktorsignal 212 gesteuert werden und/oder durch das optische Sensorsignal 211 ausgelesen werden. In einer besonders bevorzugten Ausführung können die Einrichtungen zur Erzeugung der Signale 211, 212 beweglich ausgeführt sein, so dass sie sich zu der optomechanischen Struktur 150 ausrichten lassen, vorzugsweise durch eine Vorrichtung innerhalb des mikro-optomechanischen Systems 500. In einer besonders bevorzugten Ausführung kann die Spitze 170 der optomechanischen Struktur 150 in der Fokalebene 506 des Objektivs 503 liegen. In einer besonders bevorzugten Ausführung kann weiterhin die optische Komponente 504 relativ zu dem Objektiv 503 derart beweglich gelagert sein, dass sie eine scannende Bewegung ausführen kann.

### Bezugszeichenliste

- 100: Optisches Subsystem
- 101: Einmodenfasern (*engl.* Single-Mode Fiber, SMF)
- 102: Faserarray
- 103: Mehrkernfaser
- 104: Optischer Chip
- 105: Elektrischer Leiterbahn
- 106: Grundplatte mit elektrischen Leiterbahnen
- 107: Elektrische Kontaktdrähte
- 108: Freiform-Lichtwellenleiter, im gleichen Prozess wie die optomechanische Struktur 150 hergestellt
- 109: Koppelstelle
- 110: Optische Facette
- 111: Lichtwellenleiter
- 112: Lichtwellenleiter Verzweigung
- 113: Optische Filterstrukturen
- 114: Optischer Modulator der optischen Intensität
- 115: Optische Struktur zur Auskopplung aus einem Wellenleiter (Gitterkoppler, Abstrahlstruktur)
- 116: Optische Facette des Chip 104
- 117: Weitere Facette des Chips 104
- 118: Getaperter Wellenleiter
- 120: Beschichtung
- 121: Beschichtung des Freiformspiegels 166
- 140: Optomechanisches Sensorelement
- 150: Optomechanische Struktur
- 151: Zweite optomechanische Struktur
- 152: Dritte optomechanische Struktur
- 153: Vierte optomechanische Struktur
- 154: Teilstruktur der optomechanische Struktur, welche den Strömungswiderstand verändert
- 155: Teilstruktur der optomechanische Struktur 150, welche den Strömungswiderstand mehr als 154 verändert
- 156: Teilstruktur der optomechanischen Struktur 150, welche bei einer Bewegung der optomechanischen Struktur 150 eine Veränderung von Licht 190 in die Richtungen 191 und 192 bewirkt.
- 159: Lasendes Medium in einem Optischer Resonator zwischen optischen Subsystem 100 und optomechanischer Struktur 150
- 160: Optische Resonator zwischen optischen Subsystem 100 und optomechanischer Struktur 150
- 161: Länge des optischen Resonators 160
- 162: An der Facette 110 des optischen Subsystem 100 reflektierter Anteil des Lichts
- 163: Durch die Facette 110 des optischen Subsystem 100 transmittierter Anteil des Lichts mit Propagationsrichtung hin zu der optomechanischen Struktur 150
- 164: An dem Freiformspiegel 166 reflektierter Anteil des Lichts
- 165: Durch die Facette 110 des optischen Subsystems 100 transmittierter Anteil des Lichts, welches zuvor mindestens einmal an der optomechanischen Struktur 150 reflektiert wurde
- 166: Freiformspiegel
- 167: Stehende Welle
- 168: Von dem optischen Subsystem 100 kommendes, die Facette 110 beaufschlagender Anteil des Lichts
- 169: An der Facette 110 reflektierter Anteil des Lichts
- 170: Spitze
- 171: Beschichtung
- 172: Zweiter Teilbereich der optomechanischer Struktur 150 welcher mechanische Aktuation begünstigt
- 173: Dritter Teilbereich des optischen Subsystems welche ein Wechselwirken des Signals 211 mit anderen Objekten als dem optischen Subsystem 100 verhindert
- 174: Strahlverlauf ohne den dritten Teilbereich 173
- 175: Strahlverlauf mit dem dritten Teilbereich 173
- 176: Diffraktive Strukturen
- 180: Beschichteter Freiformspiegel
- 181: Spiegel mit totaler internen Reflektion (*engl.* Total Internal Reflection, TIR)
- 182: Freiformlinse
- 183: Weitere Freiformlinse
- 184: Abschirmstruktur für die Freiformlinse 183 vor nicht erwünschten Beschichten
- 185: Abschirmstruktur für den Spiegel 181 vor nicht erwünschten Beschichten
- 186: Weiterer Spiegel mit totaler internen Reflektion
- 190: Richtung von durch die optomechanische Struktur transmittiertem Licht in Abwesenheit des optisches Signal 211
- 191: Richtung von durch die optomechanische Struktur transmittiertem und durch eine Verbiegung aufgrund eines optischen Signal 211 abgelenktem Licht
- 192: Richtung von durch die optomechanische Struktur transmittiertes und durch eine Verbiegung aufgrund eines optisches Signal 211 abgelenktem Licht
- 211: Optisches Sensorsignal
- 212: Optisches Aktorsignal
- 213: Drittes optisches Signal
- 214: Weiteres optisches Signal
- 215: Zurückkopplung des dritten optischen Signals 213 in das optische Subsystem 100
- 216: Optisches Aktorsignal, stärker als 212
- 219: Aktorelement
- 220: Lichteintrag
- 221: Durch Lichteintrag 220 entstehende Spannungen
- 222: Durch die Spannung 221 entstehende Bewegung
- 223: Bewegung
- 224: Abstand in z-Richtung zwischen optischen Subsystem 100 und Probe 300 an der Kontaktstelle der Spitze 170 mit der Probe 300
- 225: Aktorelement, welches eine Translation der optischen Struktur 150 bewirkt
- 300: Probe
- 301: Laser
- 302: Emissionsrichtung des Lasers
- 303: Kontaktflächen (Kontaktpads) für elektrische Kontaktierung des Lasers 301
- 304: Optischer Resonator des Lasers
- 305: Spiegel des Lasers
- 306: Elektrische Kontaktnadel
- 307: Feder
- 310: Fluid
- 311: Bewegungsrichtung des Fluides 310
- 400: Optische Faser
- 401: Weiterer Typ einer optischen Faser
- 402: Faseroptischer Polarisationskontroller
- 403: Laser zum Beleuchten der Spitze, insbesondere auch Weißlichtlaser, Superlumineszenzdioden oder *Swept-Source* Laser
- 404: Sensor-Laser
- 405: Aktuator-Laser
- 406: Positionssensor-Laser
- 407: Multimodige Faser
- 413: Fotodiode, eingerichtet zum Empfang von Licht angeregt durch den Laser 403
- 414: Fotodiode, eingerichtet zum Empfang von Licht des Lasers 404
- 415: Zirkulator
- 416: Isolator
- 417: Fotodiode, eingerichtet zum Empfang von Licht des Lasers 406
- 420: Signalgenerator
- 421: Weiterer Signalgenerator
- 430: Optische Signalverarbeitungseinheit als Teilkomponente des optischen Subsystems 100
- 440: Steckbare Verbindung zwischen Signalverarbeitung 430 und optischen Subsystems 100
- 441: Koppelstellen des Steckers 440
- 500: Mikro-optomechanisches System
- 503: Objektiv
- 504: Komponente, welche an einem Objektiv montiert werden kann
- 505: Linsen eines Objektivs
- 506: Fokalebene des Objektivs 503
- 1000: Koordinatensystem

## Patentansprüche

1. Mikro-optomechanisches System (500), umfassend
- mindestens ein optisches Subsystem (100), welches zu einer Abstrahlung mindestens eines optischen Aktorsignals (212) und zu einem Empfang mindestens eines optischen Sensorsignals (211) eingerichtet ist; und
- mindestens eine optomechanische Struktur (150), welche mittels eines direktschreibenden Mikrostrukturierungsverfahrens in direktem Kontakt mit dem optischen Subsystem (100) hergestellt ist, wobei die optomechanische Struktur (150) mindestens ein optisches Aktorelement (219) und mindestens ein optisches Sensorelement (140) umfasst,
wobei das optische Aktorelement (219) in Wechselwirkung mit dem optischen Aktorsignal (212) zu einer Änderung eines mechanischen Zustands der optomechanischen Struktur (150) eingerichtet ist, und wobei das optische Sensorelement (140) in Wechselwirkung mit dem optischen Sensorsignal (211) zu einer Erfassung der Änderung des mechanischen Zustands der optomechanischen Struktur (150) oder einer damit in Beziehung stehenden Größe eingerichtet ist, dadurch gegenzeichnet, dass die optomechanische Struktur aus einem Photoresist hergestellt ist.

2. Mikro-optomechanisches System (500) nach dem vorangehenden Anspruch, wobei das optische Subsystem (100) mindestens eine optische Komponente aufweist, welche ausgewählt ist aus einer Gruppe umfassend eine Glasfaser, eine Einmodenfaser (101), eine Multikernfaser, ein Faserarray (102), einen Faserstecker (440), einen integriert-optischen Chip (104), eine faseroptische Komponente, eine mikro-optische Komponente, eine aktive optische Komponente, einen optischen Modulator (114), einen optischen Verstärker, einen integriert-optischen Chip (104) und eine optische Signalverarbeitungseinheit (430).

3. Mikro-optomechanisches System (500) nach einem der vorangehenden Ansprüche, wobei die Änderung des mechanischen Zustands der optomechanischen Struktur (150) oder der damit in Beziehung stehenden Größe mindestens eine mechanische Änderung einer Komponente der optomechanischen Struktur (150) umfasst, wobei die mechanische Änderung eine Bewegung (222) umfasst, welche ausgewählt ist aus einer Gruppe umfassend Verbiegung, Translation, Schwingung, Kippung, Kontraktion, Expansion und Torsion der optomechanischen Struktur (150) oder mindestens eines Teilbereiches davon.

4. Mikro-optomechanisches System (500) nach dem vorangehenden Anspruch, wobei die optomechanische Struktur (150) eine lichtempfindliche Beschichtung (171) aufweist, welche zu einer Anregung oder Verstärkung einer Umsetzung des optischen Aktorsignals (212) in die Bewegung (222) eingerichtet ist.

5. Mikro-optomechanisches System (500) nach einem der beiden vorangehenden Ansprüche, wobei die optomechanische Struktur mindestens einen zweiten Teilbereich (172) aufweist, welcher zu einer Anregung oder zu einer Verstärkung der Umsetzung des optischen Aktorsignals (212) in die mechanische Bewegung (222) eingerichtet ist.

6. Mikro-optomechanisches System (500) nach dem vorangehenden Anspruch, wobei sich der zweite Teilbereich (172) von der übrigen optomechanischen Struktur (150) durch einen verschiedenen Wärmeausdehnungskoeffizienten, einen verschiedenen Lichtabsorptionskoeffizienten und/oder eine Strukturgröße unterhalb der Lichtwellenlänge des mit dem optischen Aktorsignals (212) eingestrahlten Lichts unterscheidet.

7. Mikro-optomechanisches System (500) nach einem der vorangehenden Ansprüche, wobei die Änderung des mechanischen Zustands der optomechanischen Struktur (150) mittels eines das optische Aktorelement (219) beaufschlagenden Lichteintrags (220) erzeugbar ist.

8. Mikro-optomechanisches System (500) nach einem der vorangehenden Ansprüche, wobei das optische Subsystem (100) mindestens eine optische Koppelstelle (109) zu einer Einkopplung und/oder Auskopplung des optischen Aktorsignals (212) und/oder des optischen Sensorsignals (211) aufweist, wobei die Einkopplung und/oder Auskopplung des optischen Aktorsignals (212) und des optischen Sensorsignals (211) an derselben optischen Koppelstelle (109) oder an mindestens zwei gesonderten optischen Koppelstellen (109) ausführbar ist.

9. Mikro-optomechanisches System (500) nach einem der vorangehenden Ansprüche, wobei das optische Sensorelement (140) eine resonante optische Struktur aufweist, wobei das optische Aktorelement (219) zu einer Veränderung einer Resonanzfrequenz der resonanten optischen Struktur eingerichtet ist.

10. Mikro-optomechanisches System (500) nach einem der vorangehenden Ansprüche, wobei das optische Sensorelement (140) eine interferometrische optische Struktur aufweist, wobei das optische Aktorelement (219) zu einer Veränderung einer Transmission der interferometrischen optischen Struktur eingerichtet ist.

11. Mikro-optomechanisches System (500) nach einem der vorangehenden Ansprüche, wobei das optische Sensorelement (140) ein Strukturelement (176) umfasst, welches eine Strukturgröße unterhalb einer Lichtwellenlänge des optischen Sensorsignals (211) aufweist.

12. Mikro-optomechanisches System (500) nach einem der vorangehenden Ansprüche, wobei die optomechanische Struktur (150) ferner mindestens eine optomechanische Komponente aufweist, welche ausgewählt ist aus einer Gruppe umfassend
- ein Cantilever, eingerichtet für Messungen von Oberflächenprofilen;
- eine Komponente eines optisch rasternden Nahfeldmikroskops;
- einen Beschleunigungssensor;
- einen dritten Teilbereich (173), eingerichtet zu einer Unterdrückung einer unerwünschten Rückkopplung des optischen Sensorsignals (211);
- einen Freiformwellenleiter (108) zur Einkopplung von Licht in einen Wellenleiter (111); und
- eine Vorrichtung zu einer Beleuchtung einer Spitze (170).

13. Mikro-optomechanisches System (500) nach einem der vorangehenden Ansprüche, wobei die mindestens eine optomechanische Struktur (150) an einer optischen Facette (110) oder an einer Oberfläche eines integriert-optischen Chips (104) angebracht ist.

14. Mikro-optomechanisches System (500) nach einem der vorangehenden Ansprüche, wobei ein mit der optomechanischen Struktur (150) in direktem Kontakt stehender erster Teilbereich des optischen Subsystems (100) mittels mindestens einer lösbaren Verbindung (440) mit mindestens einer Komponente des optischen Subsystems (100) verbindbar ist.

15. Verfahren zur Herstellung eines mikro-optomechanischen Systems (500) nach einem der vorangehenden Ansprüche, umfassend die folgenden Schritte:
a) Bereitstellen mindestens eines optischen Subsystems (100), wobei das optische Subsystem (100) zu einer Abstrahlung mindestens eines optischen Aktorsignals (212) und zu einem Empfang mindestens eines optischen Sensorsignals (211) eingerichtet ist; und
b) Herstellen mindestens einer optomechanischen Struktur (150) aus einem Photoresist mittels eines direktschreibenden Mikrostrukturierungsverfahrens in direktem Kontakt mit dem optischen Subsystem (100) derart, dass in der optomechanischen Struktur (150) mindestens ein optomechanisches Aktorelement (219) und mindestens ein optisches Sensorelement (140) erzeugt werden,
wobei das optische Aktorelement (219) in Wechselwirkung mit dem optischen Aktorsignal (212) zu einer Änderung eines mechanischen Zustands der optomechanischen Struktur (150) eingerichtet ist, und wobei das optische Sensorelement (140) in Wechselwirkung mit dem optischen Sensorsignal (211) zu einer Erfassung der Änderung des mechanischen Zustands der optomechanischen Struktur (150) oder einer damit in Beziehung stehenden Größe eingerichtet ist.

16. Verfahren nach dem vorangehenden Anspruch, wobei die Herstellung der optomechanischen Struktur (150) auf einem oder an einem zuvor durch Replikation hergestellten optischen Subsystem (100) erfolgt.

## Claims

1. Micro-optomechanical system (500), comprising
- at least one optical subsystem (100) configured for emitting at least one optical actuator signal (212) and for receiving at least one optical sensor signal (211); and
- at least one optomechanical structure (150) which is produced in direct contact with the optical subsystem (100) by means of a direct writing microstructuring method, wherein the optomechanical structure (150) comprises at least one optical actuator element (219) and at least one optical sensor element (140),
wherein the optical actuator element (219) in interaction with the optical actuator signal (212) is configured for changing a mechanical state of the optomechanical structure (150), and wherein the optical sensor element (140) in interaction with the optical sensor signal (211) is configured for detecting the change in the mechanical state of the optomechanical structure (150) or a variable related thereto, **characterized in that** the optomechanical structure is produced from a photoresist.

2. Micro-optomechanical system (500) according to the preceding claim, wherein the optical subsystem (100) has at least one optical component selected from a group comprising an optical fibre, a single-mode fibre (101), a multi-core fibre, a fibre array (102), a fibre plug (440), an integrated optical chip (104), a fibre-optical component, a micro-optical component, an active optical component, an optical modulator (114), an optical amplifier, an integrated optical chip (104) and an optical signal processing unit (430) .

3. Micro-optomechanical system (500) according to either of the preceding claims, wherein the change in the mechanical state of the optomechanical structure (150) or the variable related thereto comprises at least one mechanical change in a component of the optomechanical structure (150), wherein the mechanical change comprises a movement (222) selected from a group comprising bending, translation, oscillation, tilting, contraction, expansion and torsion of the optomechanical structure (150) or of at least one partial region thereof.

4. Micro-optomechanical system (500) according to the preceding claim, wherein the optomechanical structure (150) has a light-sensitive coating (171) configured for exciting or amplifying a conversion of the optical actuator signal (212) into the movement (222).

5. Micro-optomechanical system (500) according to either of the two preceding claims, wherein the optomechanical structure has at least one second partial region (172) configured for exciting or for amplifying the conversion of the optical actuator signal (212) into the mechanical movement (222).

6. Micro-optomechanical system (500) according to the preceding claim, wherein the second partial region (172) differs from the rest of the optomechanical structure (150) in terms of a different coefficient of thermal expansion, a different light absorption coefficient and/or a structure size smaller than the light wavelength of the light radiated in with the optical actuator signal (212).

7. Micro-optomechanical system (500) according to any of the preceding claims, wherein the change in the mechanical state of the optomechanical structure (150) is producible by means of a light input (220) impinging on the optical actuator element (219).

8. Micro-optomechanical system (500) according to any of the preceding claims, wherein the optical subsystem (100) has at least one optical coupling point (109) for input coupling and/or output coupling of the optical actuator signal (212) and/or of the optical sensor signal (211), wherein the input coupling and/or output coupling of the optical actuator signal (212) and of the optical sensor signal (211) are/is able to be carried out at the same optical coupling point (109) or at at least two separate optical coupling points (109).

9. Micro-optomechanical system (500) according to any of the preceding claims, wherein the optical sensor element (140) has a resonant optical structure, wherein the optical actuator element (219) is configured for altering a resonant frequency of the resonant optical structure.

10. Micro-optomechanical system (500) according to any of the preceding claims, wherein the optical sensor element (140) has an interferometric optical structure, wherein the optical actuator element (219) is configured for altering a transmission of the interferometric optical structure.

11. Micro-optomechanical system (500) according to any of the preceding claims, wherein the optical sensor element (140) comprises a structure element (176) having a structure size smaller than a light wavelength of the optical sensor signal (211).

12. Micro-optomechanical system (500) according to any of the preceding claims, wherein the optomechanical structure (150) furthermore has at least one optomechanical component selected from a group comprising
- a cantilever, configured for measurements of surface profiles;
- a component of a scanning near-field optical microscope;
- an acceleration sensor;
- a third partial region (173), configured for suppressing undesired feedback of the optical sensor signal (211);
- a freeform waveguide (108) for coupling light into a waveguide (111); and
- a device for illuminating a tip (170).

13. Micro-optomechanical system (500) according to any of the preceding claims, wherein the at least one optomechanical structure (150) is fitted to an optical facet (110) or to a surface of an integrated optical chip (104).

14. Micro-optomechanical system (500) according to any of the preceding claims, wherein a first partial region of the optical subsystem (100), said first partial region being in direct contact with the optomechanical structure (150), is connectable to at least one component of the optical subsystem (100) by means of at least one releasable connection (440).

15. Method for producing a micro-optomechanical system (500) according to any of the preceding claims, comprising the following steps:
a) providing at least one optical subsystem (100), wherein the optical subsystem (100) is configured for emitting at least one optical actuator signal (212) and for receiving at least one optical sensor signal (211); and
b) producing at least one optomechanical structure (150) made from a photoresist in direct contact with the optical subsystem (100) by means of a direct writing microstructuring method in such a way that at least one optomechanical actuator element (219) and at least one optical sensor element (140) are produced in the optomechanical structure (150),
wherein the optical actuator element (219) in interaction with the optical actuator signal (212) is configured for changing a mechanical state of the optomechanical structure (150), and wherein the optical sensor element (140) in interaction with the optical sensor signal (211) is configured for detecting the change in the mechanical state of the optomechanical structure (150) or a variable related thereto.

16. Method according to the preceding claim, wherein the optomechanical structure (150) is produced on or at an optical subsystem (100) produced beforehand by replication.

## Revendications

1. Système micro-optomécanique (500), comprenant
- au moins un sous-système optique (100) qui est conçu pour émettre au moins un signal d'actionneur optique (212) et pour recevoir au moins un signal de capteur optique (211) ; et
- au moins une structure optomécanique (150), qui est réalisée en contact direct avec le sous-système optique (100) par un procédé de micro-structuration à écriture directe, la structure optomécanique (150) comprenant au moins un élément actionneur optique (219) et au moins un élément capteur optique (140), l'élément actionneur optique (219) étant conçu en interaction avec le signal d'actionneur optique (212) afin de modifier un état mécanique de la structure optomécanique (150), et l'élément de capteur optique (140) étant conçu en interaction avec le signal de capteur optique (211) afin de détecter la modification de l'état mécanique de la structure optomécanique (150) ou une grandeur liée à celui-ci, **caractérisé en ce que** la structure optomécanique est réalisée à partir d'une résine photosensible.

2. Système micro-optomécanique (500) selon la revendication précédente, le sous-système optique (100) comportant au moins un composant optique qui est sélectionné dans un groupe comprenant une fibre de verre, une fibre monomode (101), une fibre multicoeur, un réseau de fibres (102), un connecteur de fibre (440), une puce optique intégrée (104), un composant à fibre optique, un composant micro-optique, un composant optique actif, un modulateur optique (114), un amplificateur optique, une puce optique intégrée (104) et une unité de traitement de signal optique (430).

3. Système micro-optomécanique (500) selon l'une des revendications précédentes, la modification de l'état mécanique de la structure optomécanique (150) ou de la grandeur liée à celui-ci comprenant au moins une modification mécanique d'un composant de la structure optomécanique (150), la modification mécanique comprenant un mouvement (222) qui est sélectionné dans un groupe comprenant la flexion, la translation, l'oscillation, l'inclinaison, la contraction, l'expansion et la torsion de la structure optomécanique (150) ou d'au moins une sous-zone de celle-ci.

4. Système micro-optomécanique (500) selon la revendication précédente, la structure optomécanique (150) comportant un revêtement photosensible (171) qui est conçu pour stimuler ou amplifier une conversion du signal d'actionneur optique (212) en le mouvement (222).

5. Système micro-optomécanique (500) selon l'une des deux revendications précédentes, la structure optomécanique comportant au moins une deuxième sous-zone (172) qui est conçue pour stimuler ou amplifier la conversion du signal d'actionneur optique (212) en le mouvement mécanique (222).

6. Système micro-optomécanique (500) selon la revendication précédente, la deuxième sous-zone (172) différant de la structure optomécanique restante (150) par un coefficient de dilatation thermique différent, un coefficient d'absorption de lumière différent et/ou une taille de structure inférieure à la longueur d'onde de la lumière émise avec le signal d'actionneur optique (212) .

7. Système micro-optomécanique (500) selon l'une des revendications précédentes, la modification de l'état mécanique de la structure optomécanique (150) pouvant être générée au moyen d'une entrée de lumière (220) agissant sur l'élément actionneur optique (219).

8. Système micro-optomécanique (500) selon l'une des revendications précédentes, le sous-système optique (100) comportant au moins un point de couplage optique (109) destiné à l'injection par couplage et/ou à la sortie par couplage du signal d'actionneur optique (212) et/ou du signal de capteur optique (211), l'injection par couplage et/ou la sortie par couplage du signal d'actionneur optique (212) et du signal de capteur optique (211) pouvant être effectués au même point de couplage optique (109) ou en au moins deux points de couplage optique (109) séparés.

9. Système micro-optomécanique (500) selon l'une des revendications précédentes, l'élément de capteur optique (140) comportant une structure optique résonante, l'élément actionneur optique (219) étant conçu pour modifier une fréquence de résonance de la structure optique résonante.

10. Système micro-optomécanique (500) selon l'une des revendications précédentes, l'élément de capteur optique (140) comportant une structure optique interférométrique, l'élément actionneur optique (219) étant conçu pour modifier une transmission de la structure optique interférométrique.

11. Système micro-optomécanique (500) selon l'une des revendications précédentes, l'élément capteur optique (140) comprenant un élément de structure (176) qui a une taille de structure inférieure à une longueur d'onde lumineuse du signal de capteur optique (211).

12. Système micro-optomécanique (500) selon l'une des revendications précédentes, la structure optomécanique (150) comprenant en outre au moins un composant optomécanique sélectionné dans un groupe comprenant
- un élément en porte-à-faux, conçu pour des mesures de profilés de surface ;
- un composant d'un microscope optique à balayage en champ proche ;
- un capteur d'accélération ;
- une troisième sous-zone (173), conçue pour supprimer un rétro-couplage indésirable du signal du capteur optique (211) ;
- un guide d'ondes de forme libre (108) destiné à injecter par couplage de la lumière dans un guide d'ondes (111) ; et
- un dispositif d'éclairage d'une pointe (170).

13. Système micro-optomécanique (500) selon l'une des revendications précédentes, l'au moins une structure optomécanique (150) étant fixée à une facette optique (110) ou à une surface d'une puce optique intégrée (104).

14. Système micro-optomécanique (500) selon l'une des revendications précédentes, une première sous-zone du sous-système optique (100), laquelle est en contact direct avec la structure optomécanique (150), pouvant être reliée à au moins un composant du sous-système optique (100) au moyen d'au moins une liaison amovible (440).

15. Procédé de réalisation d'un système micro-optomécanique (500) selon l'une des revendications précédentes, comprenant les étapes suivantes :
a) fournir au moins un sous-système optique (100), le sous-système optique (100) étant conçu pour émettre au moins un signal d'actionneur optique (212) et pour recevoir au moins un signal de capteur optique (211) ; et
b) réaliser au moins une structure optomécanique (150) à partir d'une résine photosensible à l'aide d'un procédé de micro-structuration à écriture directe en contact direct avec le sous-système optique (100) de manière à ce qu'au moins un élément actionneur optomécanique (219) et au moins un élément capteur optique (140) soient générés dans la structure optomécanique (150), l'élément actionneur optique (219) étant conçu en interaction avec le signal d'actionneur optique (212) afin de modifier un état mécanique de la structure optomécanique (150), et l'élément capteur optique (140) étant conçu en interaction avec le signal de capteur optique (211) afin de détecter la modification de l'état mécanique de la structure optomécanique (150) ou une grandeur liée à celui-ci.

16. Procédé selon la revendication précédente, la réalisation de la structure optomécanique (150) étant effectuée sur un sous-système optique (100), ou au niveau de celui-ci, préalablement réalisé par réplication.
